# EUROPEAN PATENT SPECIFICATION

(11) **EP 3 734 516 B1**
(45) Date of publication and mention of the grant of the patent: **30.10.2024**
(21) Application number: 19738693.1
(22) Date of filing: 10.01.2019
(51) Int. Cl.: G06N 3/084, G06N 3/045, G06F 9/50, G06N 3/063, G06N 5/01

(54) **COMPUTING SYSTEM AND METHOD BASED ON TREE TOPOLOGY**
COMPUTERSYSTEM UND VERFAHREN AUF DER GRUNDLAGE EINER BAUMTOPOLOGIE
SYSTÈME INFORMATIQUE ET PROCÉDÉ BASÉ SUR UNE TOPOLOGIE D'ARBRE

(30) Priority: 12.01.2018 CN 201810033391
(43) Date of publication of application: 04.11.2020
(73) Proprietor: HUAWEI TECHNOLOGIES CO., LTD., Shenzhen, Guangdong 518129 (CN)
(72) Inventor: DAI, Mingyang, Shenzhen, Guangdong 518129 (CN); SU, Qing, Shenzhen, Guangdong 518129 (CN); WANG, Xiaofei, Shenzhen, Guangdong 518129 (CN)
(74) Representative: Maiwald GmbH
(86) International application number: PCT/CN2019/071116
(87) International publication number: WO 2019/137416

(56) References cited:
- WO-A2-03/060748
- CN-A- 104 702 690
- CN-A- 106 357 478
- CN-A- 106 713 468
- CN-A- 106 776 461
- US-A1- 2014 325 182
- US-B2- 7 478 278

## Description

This application claims priority to Chinese Patent Application No. 201810033391.5, filed with the China National Intellectual Property Administration on January 12, 2018, and entitled "TREE TOPOLOGY BASED COMPUTING SYSTEM AND METHOD".

### TECHNICAL FIELD

The present invention relates to the field of computing technologies, and in particular, to a tree topology based computing system and method.

### BACKGROUND

Artificial intelligence (AI) application grows explosively. The AI application is based on a deep neural network. Recently, the deep neural network has been applied to fields such as speech recognition, image recognition, and a complex game in a breakthrough manner, and is deployed in many fields such as face recognition, a safe city, automatic driving, medical image detection, an Al intelligent Go, and a conference recording system. Performance of the deep neural network is good and even better than that of a human. This benefits from that the deep neural network can extract a higher-layer feature from raw data and can effectively learn from massive data.

To further improve performance of the deep neural network, a depth of the network, a quantity of network parameters, calculation algorithm strength, and a quantity of training datasets are all increased. Consequently, computing complexity and a training time are both greatly increased. Atypical ResNet-50 network is used as an example. 44 hours are required to complete 90 epochs of training based on an ImageNet training dataset by using a high-performance server including eight common K80s. Even if a high-performance server including eight V100s that are quickest currently is used, about eight hours are required to complete the 90 epochs of training. This training time is still very long, and deep neural network model and algorithm research personnel need to wait for a long time to obtain a feedback. This severely affects development efficiency of a model and an algorithm. Especially for a new field, a new model, and a new algorithm, a plurality of groups of hyperparameters usually need to be tried, and adjustment and optimization are repeatedly performed to obtain an ideal result. This process is longer, and has become a key bottleneck in a process of development -> verification -> deployment.

Therefore, promotion, deployment, and application of the deep neural network in a large-scale manner in many fields impose a higher and faster requirement for training efficiency. Training efficiency of a single server node is far from enough to meet a requirement of a production environment. To resolve this problem, large-scale distributed training is usually used in the prior art. For this model, a training process is distributed to a plurality of computing nodes for execution, and a final training result is obtained through aggregation, to alleviate computing pressure on the single server node and improve computing efficiency. However, because bandwidth between computing nodes in the large-scale distributed training is limited, when there is a large amount of training data, an aggregation process may be slow, and computing efficiency is low.
WO 03/060748 A2 discloses methods and systems for parallel computation of an algorithm using a plurality of nodes configured as a Howard Cascade. A home node of a Howard Cascade receives a request from ahost system to compute an algorithm identified in the request. The request is distributed to processing nodes of the Howard Cascade in a time sequence order in a manner to minimize the time to so expand the Howard Cascade. The participating nodes then perform the designated portion of the algorithm in parallel. Partial results from each node are agglomerated upstream to higher nodes of the structure and then returned to the host system. The nodes each include a library of stored algorithms accompanied by data template information defining partitioning of the data used in the algorithm among the number of participating nodes. US 7 478 278 B2 discloses parallel computer system for use in high performance computing applications e.g. life science, makes server to use rolling checksum algorithm to collect parallel checkpoint.

### SUMMARY

Embodiments of the present invention provide a tree topology based computing system and method, so as to resolve a problem of low computing efficiency of a computing system in large-scale distributed training.

According to a first aspect, an embodiment of the present invention provides a tree topology based computing system, where the system may include:
a plurality of node clusters, where the plurality of node clusters constitute a multi-layer network structure in a tree topology manner, any minimum tree in the network structure includes a second node cluster serving as a parent node and at least one first node cluster serving as a child node, and the second node cluster is connected to the at least one first node cluster through a physical link, where each of the at least one first node cluster is configured to: obtain a first computing result based on a first computing input, and send the first computing result to the second node cluster through the physical link; and the second node cluster is configured to: receive, through the physical link, at least one first computing result sent by the at least one first node cluster, and aggregate the at least one first computing result and a second computing result to obtain a third computing result, where the second computing result is a result obtained by the second node cluster based on a second computing input.

According to the computing system provided in this embodiment of the present invention, each node cluster is responsible for aggregating computing results of the node cluster and is also responsible for aggregating computing results of a lower-layer node cluster connected to the node cluster, so that not only transmission of data from a lower layer to an upper layer is completed, but also data aggregation between node clusters is completed layer by layer in a transmission process, thereby reducing an amount of data that is to be aggregated and that is transmitted in bandwidth. In addition, because a tree networking topology is used in this embodiment of the present invention, computing and aggregation are performed between different node clusters at a same layer in parallel, thereby further improving computing and aggregation efficiency. In this way, a problem of low computing efficiency in large-scale distributed training is resolved.

The second node cluster includes at least one second computing node, and the second computing node is a neural network accelerator; and the first node cluster includes at least one first computing node, and the first computing node is a neural network accelerator. In this embodiment of the present invention, one or more neural network accelerators are disposed in a node cluster, so as to implement parallel computing in a neural network.

The second node cluster is further configured to send the third computing result to a third node cluster for aggregation, where the third node cluster is a parent node of the second node cluster. In this embodiment of the present invention, the second node cluster aggregates computing results of the first node cluster at a lower layer, and then sends an aggregated third result to a parent node of the second node cluster serving as a child node in a minimum tree, so as to perform upper-layer aggregation.

In a possible implementation, any minimum tree in the network structure includes one second node cluster and k first node clusters, where k is an integer greater than or equal to 1. In this embodiment of the present invention, it is set that each minimum tree is converged according to a proportion of k:1, to facilitate management and expansion.

In a possible implementation, the second node cluster includes k second computing nodes, and any one of the k first node clusters includes k first computing nodes; and in any minimum tree in the network structure, the k second computing nodes in the second node cluster one-to-one correspond to the k first node clusters, and any one of the k second computing nodes is connected to the k first computing nodes in the corresponding first node cluster through the physical link. In this embodiment of the present invention, each node cluster includes k computing nodes, to facilitate distributed computing and distributed aggregation. In addition, the k second computing nodes in the second node cluster serving as a parent node one-to-one correspond to the k first node clusters, to be specific, one second computing node is responsible for performing upstream aggregation on one first node cluster, to balance an aggregation process. This helps further improve computing efficiency of a computing system.

In a possible implementation, any one of the k first node clusters is specifically configured to:
distribute the first computing input to the k first computing nodes for distributed computing, to obtain k first distributed computing results; perform distributed aggregation on the k first computing nodes based on the k first distributed computing results respectively, to obtain one slice of the first computing result on each first computing node; and synchronously or asynchronously send, by using the k first computing nodes, k slices of the first computing result to a corresponding second computing node for aggregation. In this embodiment of the present invention, computing tasks of the first node cluster serving as a child node are distributed to the k first computing nodes for parallel processing, and after a computing result of each first computing node is obtained, parallel aggregation is performed between the k first computing nodes, thereby greatly improving computing and aggregation efficiency.

In a possible implementation, the second node cluster is specifically configured to: distribute the second computing input to the k second computing nodes for distributed computing, to obtain k second distributed computing results, where the k second distributed computing results are the second computing result; receive, respectively by using the k second computing nodes, the k slices of the first computing result that are sent by the k first computing nodes in the corresponding first node cluster; aggregate, respectively by using the k second computing nodes, the second distributed computing result obtained through computation by each second computing node and the k slices of the first computing result of the corresponding first node cluster; and perform distributed aggregation on results obtained through aggregation by using all of the k second computing nodes, to obtain one slice of the third computing result on each second computing node. In this embodiment of the present invention, computing tasks of the second node cluster serving as a parent node are distributed to the k second computing nodes for parallel processing, and after a computing result of each second computing node is obtained, the second computing node aggregates computing results sent by the corresponding k first node clusters. In addition, the process between the k second computing nodes is a parallel operation. Finally, distributed aggregation between nodes is performed once again between the k second computing nodes, to obtain a final aggregation result of the second node cluster, thereby greatly improving computing and aggregation efficiency.

In a possible implementation, any one of the k first node clusters is specifically configured to:
distribute the first computing input to the k first computing nodes for distributed computing, to obtain k first distributed computing results; perform aggregation on a specified first computing node in the k first computing nodes based on the k first distributed computing results, to obtain the first computing result; and send, by using the specified first computing node, the first computing result to a corresponding second computing node for aggregation. In this embodiment of the present invention, computing tasks of the first node cluster serving as a child node are distributed to the k first computing nodes for parallel processing, after a computing result of each first computing node is obtained, aggregation is performed on the specified first computing node in the k first computing nodes, and then an aggregation result is sent to the second computing node for upper-layer aggregation, thereby greatly improving computing and aggregation efficiency.

In a possible implementation, the second node cluster is specifically configured to: distribute the second computing input to the k second computing nodes for distributed computing, to obtain k second distributed computing results; receive, by using each of the k second computing nodes, the first computing result sent by the specified first computing node in the corresponding first node cluster, and aggregate the first computing result and the obtained second distributed computing results; and aggregate, by using a specified second computing node in the k second computing nodes, results obtained through aggregation by using all of the k second computing nodes, to obtain the third computing result. In this embodiment of the present invention, computing tasks of the second node cluster serving as a parent node are distributed to the k second computing nodes for parallel processing, and after a computing result of each second computing node is obtained, the second computing node aggregates computing results sent by the corresponding k first node clusters. In addition, the process between the k second computing nodes is a parallel operation. Finally, distributed aggregation between nodes is performed once again by using the specified second computing node in the k second computing nodes, to obtain a final aggregation result of the second node cluster, thereby greatly improving computing and aggregation efficiency.

In a possible implementation, the first computing input includes a first parameter; and the second node cluster is further configured to:
send the first parameter to the k first node clusters respectively by using the k second computing nodes. In this embodiment of the present invention, the second node cluster serving as a parent node delivers, in parallel, related computing input parameters of the k first computing nodes to the corresponding first node cluster by using the first computing nodes, so as to increase a speed of obtaining the related parameters by the first node cluster, thereby improving parameter synchronization efficiency of an entire system.

In a possible implementation, the second node cluster is specifically configured to: send, by using each second computing node, the first parameter divided into k slices respectively to the k first computing nodes in the corresponding first node cluster, so that the first parameter is broadcast between the k first computing nodes; or send the first parameter to the k first computing nodes in the corresponding first node cluster in parallel respectively by using the k second computing nodes; or send the first parameter to one first computing node in the corresponding first node cluster by using the k second computing nodes, so that the one first computing node broadcasts the first parameter between other first computing nodes in the same cluster. In this embodiment of the present invention, in a process of delivering a related parameter of the computing system, the first parameter is divided into k slices and the k slices are sent to the k first computing nodes in parallel; or the first parameter is simultaneously sent to the k first computing nodes; or the first parameter is directly sent to a first computing node, and then the first computing node broadcasts the first parameter between other first computing nodes in the same cluster, so as to implement a process of delivering the first parameter.

In a possible implementation, the second node cluster is directly connected to the at least one first node cluster through the physical link. In this embodiment of the present invention, in each minimum tree in the computing system, a second node cluster may be directly connected to a first node cluster through a physical link.

In a possible implementation, the computing system further includes a switch, and the switch and each of the plurality of node clusters are directly connected through the physical link; and the second node cluster is connected to the at least one first node cluster through the switch. In this embodiment of the present invention, in each minimum tree in the computing system, a second node cluster may be indirectly and physically connected to a first node cluster through a switch.

In a possible implementation, the computing system is a neural network computing system; and the first computing input and the second computing input include a weight, training data, an offset, and a hyperparameter, and the first computing result, the second computing result, and the third computing result are gradients. In this embodiment of the present invention, the computing system is applied to a neural network training model, a corresponding computing input is a related parameter in the neural network training model, and a corresponding computing result is a gradient value.

According to a second aspect, an embodiment of the present invention provides a computing method, where the method may include:
receiving, by a second node cluster, a first computing result sent by at least one first node cluster, where the first computing result is a result obtained by each of the at least one first node cluster based on a first computing input, the first node cluster and the second node cluster are in any minimum tree of a same tree network structure, and the second node cluster is a parent node of the at least one first node cluster;
aggregating, by the second node cluster, the first computing result and a second computing result, to obtain a third computing result, where the second computing result is a result obtained by the second node cluster based on a second computing input; and
sending, by the second node cluster, the third computing result to a third node cluster for aggregation, where the third node cluster is in the tree network topology, and the third node cluster is a parent node of the second node cluster.

In a possible implementation, the second node cluster includes k second computing nodes, and any one of the k first node clusters includes k first computing nodes; and in any minimum tree in the network structure, the k second computing nodes in the second node cluster one-to-one correspond to the k first node clusters, and any one of the k second computing nodes is connected to the k first computing nodes in the corresponding first node cluster through a physical link.

In a possible implementation, the aggregating, by the second node cluster, the first computing result and the second computing result, to obtain a third computing result includes: distributing, by the second node cluster, the second computing input to the k second computing nodes for distributed computing, to obtain k second distributed computing results, where the k second distributed computing results are the second computing result; receiving, by the second node cluster respectively by using the k second computing nodes, k slices of the first computing result that are sent by the k first computing nodes in the corresponding first node cluster; aggregating, by the second node cluster respectively by using the k second computing nodes, the second distributed computing result obtained through computation by each second computing node and the k slices of the first computing result of the corresponding first node cluster; and performing, by the second node cluster, distributed aggregation on results obtained through aggregation by using all of the k second computing nodes, to obtain one slice of the third computing result on each second computing node.

In a possible implementation, the aggregating, by the second node cluster, the first computing result and the second computing result, to obtain a third computing result includes: distributing, by the second node cluster, the second computing input to the k second computing nodes for distributed computing, to obtain k second distributed computing results; receiving, by the second node cluster by using each of the k second computing nodes, the first computing result sent by the specified first computing node in the corresponding first node cluster, and aggregating the first computing result and the obtained second distributed computing results; and aggregating, by the second node cluster by using a specified second computing node in the k second computing nodes, results obtained through aggregation by using all of the k second computing nodes, to obtain the third computing result.

In a possible implementation, the method further includes: sending, by the second node cluster, the first parameter to the k first node clusters respectively by using the k second computing nodes.

In a possible implementation, the sending, by the second node cluster, the first parameter to the k first node clusters respectively by using the k second computing nodes includes: sending, by the second node cluster by using each second computing node, the first parameter divided into k slices respectively to the k first computing nodes in the corresponding first node cluster, so that the first parameter is broadcast between the k first computing nodes; or sending, by the second node cluster, the first parameter to the k first computing nodes in the corresponding first node cluster in parallel respectively by using the k second computing nodes; or sending, by the second node cluster, the first parameter to one first computing node in the corresponding first node cluster by using the k second computing nodes, so that the one first computing node broadcasts the first parameter between other first computing nodes in the same cluster.

In a possible implementation, the first computing input and the second computing input include a weight, training data, an offset, and a hyperparameter, and the first computing result, the second computing result, and the third computing result are gradients.

According to a third aspect, this application provides a computer storage medium, configured to store a computer software instruction used by the computing system provided in the first aspect. The computer software instruction includes a program designed for performing the foregoing aspects.

According to a fourth aspect, an embodiment of the present invention provides a computer program. The computer program includes an instruction. When the computer program is executed by a computer, the computer is enabled to execute a procedure in the computing system in the first aspect.

According to a fifth aspect, this application provides a node cluster. The node cluster is configured to support a function implemented by the first node cluster or the second node cluster in the computing system in the first aspect.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic diagram of a fully connected architecture;
FIG. 2 is a schematic diagram of a ring networking architecture;
FIG. 3 is a schematic diagram of a fat-tree networking architecture;
FIG. 4 is an architectural diagram of a tree topology based computing system according to an embodiment of the present invention;
FIG. 5 is a schematic structural diagram of a connection relationship between node clusters in a minimum tree according to an embodiment of the present invention;
FIG. 6A and FIG. 6B are a schematic diagram of a parent-child node structure and a connection relationship in a minimum tree according to an embodiment of the present invention;
FIG. 7A and FIG. 7B are a schematic diagram of an upstream data transmission path between node clusters according to an embodiment of the present invention;
FIG. 8 is a schematic diagram of upstream aggregation in a computing system according to an embodiment of the present invention;
FIG. 9A and FIG. 9B are a schematic diagram of a downstream data transmission path between node clusters according to an embodiment of the present invention;
FIG. 10 is a schematic diagram of delivering of a parameter in a computing system according to an embodiment of the present invention;
FIG. 11 is a schematic diagram of an aggregation and synchronization pipeline algorithm according to an embodiment of the present invention;
FIG. 12 is a schematic architectural diagram of a minimum tree in another tree topology based computing system according to an embodiment of the present invention;
FIG. 13 is a schematic architectural diagram of a large-scale computing system according to an embodiment of the present invention; and
FIG. 14 is a schematic flowchart of a computing method according to an embodiment of the present invention.

### DESCRIPTION OF EMBODIMENTS

The following describes the embodiments of the present invention with reference to the accompanying drawings in the embodiments of the present invention.

In this specification, claims, and accompanying drawings of this application, the terms such as "first", "second", "third", and "fourth" are intended to distinguish between different objects but do not indicate a particular order. In addition, the terms "include", "have", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in this specification means that a particular characteristic, structure, or feature described with reference to the embodiment may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that the embodiments described in this specification may be combined with another embodiment.

Terminologies such as "component", "module", and "system" used in this specification are used to indicate computer-related entities, hardware, firmware, a combination of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the internet interacting with other systems by using the signal).

Some terms in this application are first described, so as to help persons skilled in the art have a better understanding.
(1) A solid-state drive (SSD) is a hard disk made of a solid-state electronic storage chip array, and includes a control unit and a storage unit (a FLASH chip or a DRAM chip). The solid-state drive is exactly the same as a common hard disk in terms of specifications and a definition of an interface, a function, usage, and a product shape and size.
(2) A network adapter: a desktop computer are generally connected to a network by using a built-in Network Interface Card (NIC). The network adapter is also referred to as a "NIC". The NIC is one of most basic components in a local area network, and is a hardware device that connects a computer and a network. Data communication can be implemented through a connection by using a NIC, regardless of whether the connection is a twisted pair connection, a coaxial cable connection, or an optical fiber connection. Main technical parameters of the NIC are bandwidth, a bus mode, an electrical interface mode, and the like. Basic functions of the NIC are as follows: parallel to serial data conversion, packet encoding and decoding, network access control, data buffering, and a network signal interaction.
(3) An Non-Volatile Memory express (NVMe) protocol is a protocol that is similar to the AHCI and that is set up on an M.2 interface, and is a protocol specially designed for a flash storage.
(4) A double data rate synchronous dynamic random access memory (DDR SDRAM) is referred to as DDR for short. A DDR memory is developed based on an SDRAM, and still uses an SDRAM production system. Therefore, for a memory vendor, only a device for manufacturing an ordinary SDRAM needs to be slightly improved, to produce a DDR memory, thereby effectively reducing costs. Compared with a conventional single data rate, a DDR technology implements a read/write operation twice in one clock cycle. In other words, one read/write operation is performed at each of a rising edge and a falling edge of a clock.
(5) Peripheral component interconnect express (PCI-Express) is referred to as PCIe for short, and is a high-speed serial peripheral component interconnect express bus. As a local bus of a processor system, the PCIe bus has a function similar to that of a PCI bus, and is mainly used to connect external devices in the processor system. Certainly, the PCIe bus may alternatively be used to connect another processor system. In different processor systems, methods for implementing a PCIe architecture are slightly different. However, in most processor systems, basic modules such as an RC, a switch, and a PCIe-to-PCI bridge are used to connect PCIe devices and PCI devices. A device based on the PCIe bus is also referred to as an Endpoint (EP).
(6) A neural network accelerator (NN Accelerator/NNA) is configured to complete computation of forward propagation and back propagation of a neural network. As a processor, the neural network accelerator may be a graphics processing unit (GPU), or may be a processor implemented based on a field programmable gate array (FPGA) or an application-specific integrated circuit (ASIC). A specific implementation form of the neural network accelerator is not limited in this application.
(7) A neural-network processing unit (NPU) uses a "data-driven parallel computing" architecture, and may be configured to process massive multimedia data of a video type and an image type.
(8) Gradient aggregation: A gradient is a maximum directional derivative of a function based on a point, and the function has a maximum change rate along a gradient direction. The gradient of the function based on the point is a vector, where a direction of the vector is consistent with a direction for obtaining the maximum directional derivative, and a modulus of the vector is a maximum value of the directional derivative. Aggregation means accumulating gradient data obtained through computation by each computing node (worker). A gradient descent method in the neural network is a first-order optimization algorithm, and is usually referred to as a steepest descent method. To find a local minimum value of a function by using the gradient descent method, iterative search needs to be performed on a specified step distance point in an opposite direction of a gradient (or an approximate gradient) of the function based on a current point.

Next, a technical problem that needs to be resolved in this application and an application scenario are proposed. In the prior art, in a large-scale distributed training system, a training manner widely applied in an academic circle and an industrial circle refers to synchronous stochastic gradient descent and data parallelism, and key points of a training algorithm are as follows:
(1) Each computing node in a group independently completes computing of a mini-batch of training data of the computing node, to obtain a gradient.
(2) All computing nodes in the group need to aggregate gradients obtained through computation, to form an aggregated gradient.
(3) Based on the aggregated gradient, calculate a new parameter value with reference to a hyperparameter such as a learning rate.
(4) Distribute the new parameter value to each computing node in the group.
(5) After obtaining the new parameter value, all the computing nodes start a next round of iterative computation.

It can be learned from the foregoing process that deep neural network training is a high-strength computation process that is intensive in computing and network bandwidth and is very sensitive to a latency. The following Table 1 shows a neural network model of a typical deep neural network, and a parameter quantity and a parameter size list that correspond to the model. K = 1000, and M = 1000 x 1000 = 1000000.

**Table 1**

| Neural network model | Parameter quantity | Parameter size (Float32) |
|---|---|---|
| CIFAR-10 quick | 145.6 K | 582.4 Kbytes |
| GoogLeNet | 5 M | 20 Mbytes |
| Inception-V3 | 27 M | 108 Mbytes |
| VGG19 | 143 M | 572 Mbytes |
| VGG19-22K | 229 M | 916 Mbytes |
| ResNet-152 | 60.2 M | 240.8 Mbytes |

It can be learned from the foregoing list that there is a relatively large difference in parameter quantities and parameter sizes of different network models. VGG19-22K is used as an example. A parameter size of the VGG19-22K is up to 916 Mbytes. With reference to the key point (2) and the key point (4) in the foregoing training process, it can be learned that in the training process, gradients and parameters are exchanged very frequently between computing nodes, and traffic is also very high. This becomes worse with an increase of a computing node scale in the group. Therefore, how to effectively and quickly aggregate and synchronize these parameters between all computing nodes in an entire group system is a key problem that needs to be resolved in large-scale distributed training. There are related solutions in the prior art, for example:

### Prior art 1:

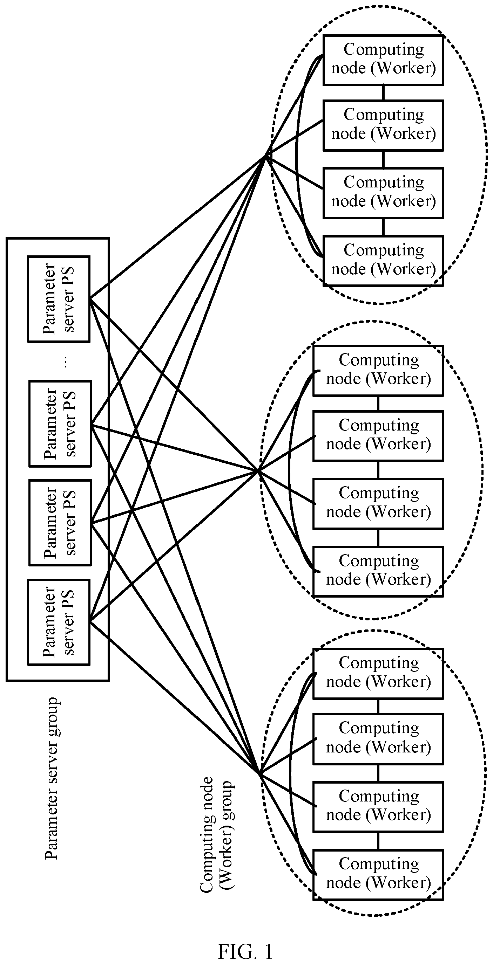

Currently, a fully connected structure (computing node-parameter server or worker-parameter server) is widely applied to a distributed training system. A topology of the distributed training system is shown in FIG. 1. FIG. 1 is a schematic diagram of a fully connected architecture. A working principle of the fully connected architecture is as follows:

An entire group includes many workers, and the worker is responsible for gradient computation of the local node. A parameter server (PS) is responsible for collecting gradient data computed by all workers in the entire group, aggregating the gradient data, calculating a new weight based on the aggregated gradient data, and then delivering the new weight to all the workers. To share pressure of network bandwidth and weight calculation, a plurality of PSs are generally used to constitute a group to bear workload. Assuming that a quantity of PSs in the group is P and a quantity of workers in the group is W, a working mechanism is as follows:
1. Each worker evenly divides a calculated gradient into P slices, and separately sends the P slices to all PSs, and each PS obtains an independent slice.
2. Each PS collects gradients sent by all the workers, generates a new weight through calculation, and sends the new weight to all the workers.
3. Each worker accumulates the weights received from all the PSs to form a complete weight for a new round of iterative computation.

Disadvantages of the prior art 1 are as follows:
(1) Group performance: From a perspective of the foregoing interaction relationship between the workers and the PSs, the group is a fully connected topology, and performance of the group is not high. It is assumed that a quantity of worker nodes in the group is N, a gradient parameter size is M, transmission bandwidth between the nodes is B, and a preparation time for network transmission between the nodes is tₛ. A time overhead for completing aggregation and synchronization of gradient parameters in a synchronous stochastic gradient descent (SGD) training algorithm is: T = 2 x N x (tₛ + M/B), and the time complexity is O(N). In this case, a communication latency is relatively large, and the latency has great impact on distributed training efficiency.
(2) Group scalability: In the foregoing fully connected topology, a phenomenon of a "many-to-one traffic pattern" exists. For example, all the workers in the group need to send gradient data to a same PS. With an increase in the quantity N of worker nodes, the group scalability severely deteriorates. A network packet loss and congestion caused by the "many-to-one traffic pattern" seriously affect system performance. In addition, a group speed-up ratio is not high, and scalability of a group scale is limited. Consequently, it is difficult to construct a large training group.

### Prior art 2:

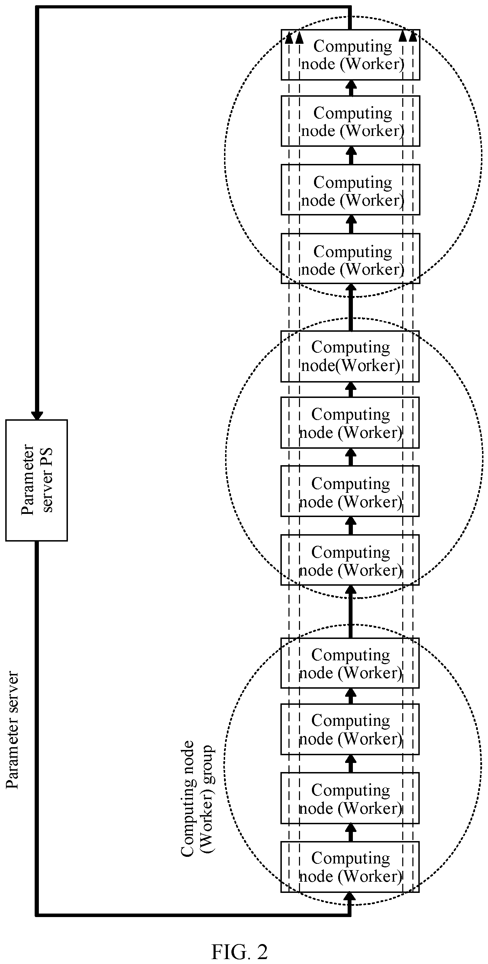

To resolve the foregoing problem of the "many-to-one traffic pattern", another solution is to restrict a sending/receiving relationship between worker nodes in a group, to form a logical ring, that is, a ring structure. FIG. 2 is a schematic diagram of a ring networking architecture. A working mechanism of the ring structure is as follows:
1. Each worker node receives data from a pre-order node, processes the received data, and then sends the processed data to a post-order node.
2. In the prior art, to improve efficiency, the worker usually segments to-be-transmitted data into small slices, and a plurality of transmission channel pipelines perform parallel transmission, to fully use transmission bandwidth resources. For example, as shown by dashed lines in FIG. 2, the to-be-transmitted data is segmented into four small slices, that is, the four small slices are transmitted in parallel through four transmission channel pipelines.

Disadvantages of the prior art 2 are as follows:
(1) Group performance: It is assumed that a quantity of worker nodes in the group is N, a gradient parameter size is M, transmission bandwidth between the nodes is B, and a preparation time for network transmission between the nodes is tₛ. A time overhead for completing aggregation and synchronization of gradient parameters in a synchronous SGD training algorithm is: T = 2 x (N - 1) x (tₛ + M/B), and the time complexity is O(N). In this case, a communication latency is relatively large, and the latency has great impact on distributed training efficiency.
(2) Group scalability: In the ring topology, the data sending/receiving relationship between worker nodes is restricted, to form the logical ring. This solves the problem of the "many-to-one traffic pattern". However, with an increase in the quantity of nodes, a ring length increases linearly, and an end-to-end latency also increases linearly. In addition, a group speed-up ratio is not high, and scalability of a group scale is limited. Consequently, it is difficult to construct a large training group.

### Prior art 3:

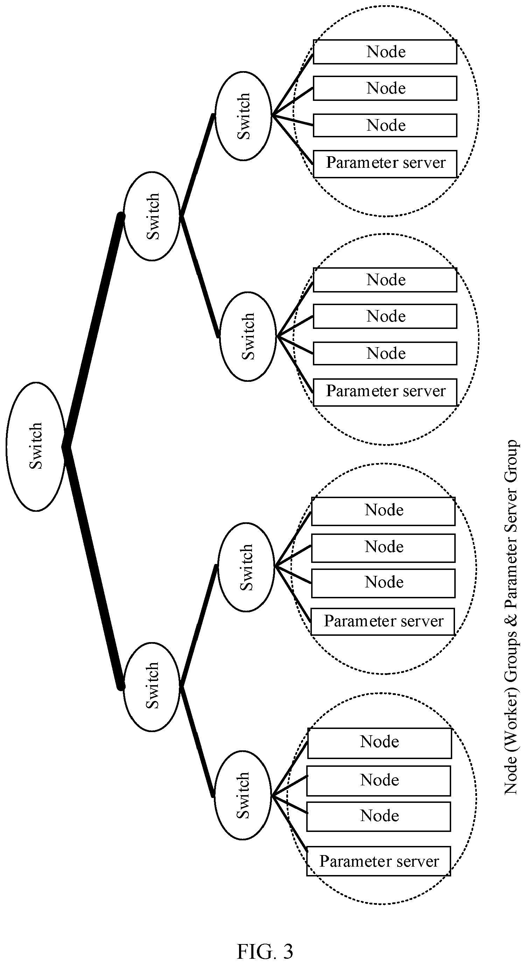

To resolve the problem of the Ring length in the ring topology, an optimization solution is to adopt the following fat-tree networking. FIG. 3 is a schematic diagram of a fat-tree networking architecture. A working mechanism of a Fat-Tree structure is as follows:

In a group, a node worker and a parameter server PS constitute a tree structure, and the tree structure is converged in a k: 1 manner (as shown in FIG. 3, k = 3). To implement non-blocking switching, a node closer to a root node requires higher network bandwidth.

Disadvantages of the prior art 3 are as follows:
(1) Group performance: It is assumed that a quantity of worker nodes in the group is N, a gradient parameter size is M, transmission bandwidth between the nodes is B, and a preparation time for network transmission between the nodes is tₛ. A time overhead required for completing aggregation and synchronization of gradient parameters in a synchronous SGD training algorithm is: T = 2 x Logₖ(N) x (tₛ + M/B), where k is a convergence ratio, and the time complexity is O(Logₖ(N)).
(2) Group scalability: To support a non-blocking network, a node closer to a root node requires higher network bandwidth and needs to have a higher switching capability. This requirement becomes higher linearly with an increase in the quantity of nodes in the group. For a deep neural network, a parameter size is very large, interaction is frequently performed, a requirement on network bandwidth and a switching capability of a root node is higher, and network deployment costs are very high. All gradients in the entire group are aggregated on the root node, and a computing hotspot is formed on the root node. In addition, a group speed-up ratio and scalability of a group scale are limited. Consequently, it is difficult to construct a large training cluster.

In conclusion, the existing solutions have disadvantages regarding a scalability capability of a group. When a group scale increases and a quantity of nodes in the group increases, performance of the group degrades, linearity of the group deteriorates, deployment costs of the group increase, and network performance optimization and group operation overheads increase. This is unfavorable to construction of a large-scale AI group. Therefore, a technical problem to be resolved in this application is how to effectively and quickly aggregate and synchronize related parameters between all computing nodes in an entire group system in a large-scale distributed training system, to implement scalability of the group system, facilitate construction of a large-scale AI group, and improve training efficiency.

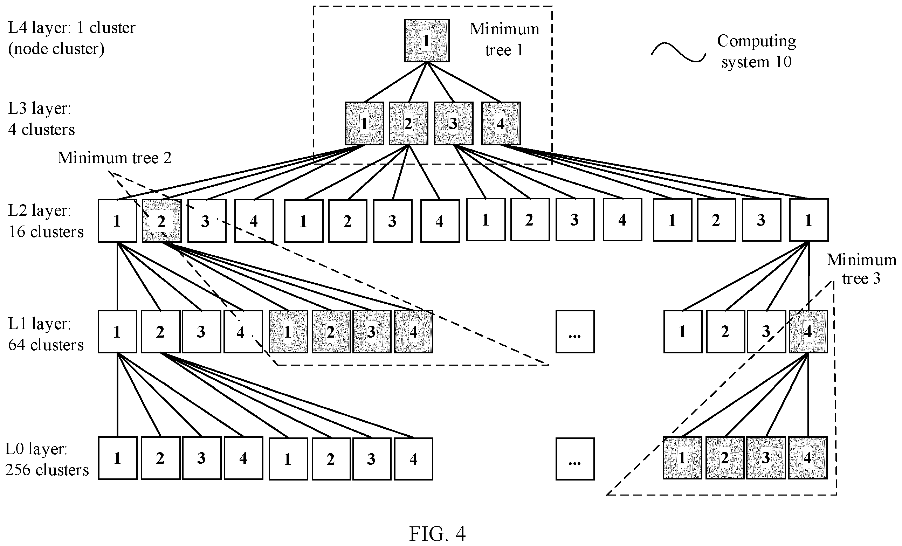

Based on the foregoing description, the following first describes an architecture of a computing system provided in an embodiment of the present invention. FIG. 4 is an architectural diagram of a tree topology based computing system according to an embodiment of the present invention. The computing system 10 may include a plurality of node clusters (each block in FIG. 4 represents one node cluster), and the plurality of node clusters constitute a multi-layer network structure in a tree topology manner (a layer N = 5 is used as an example in FIG. 4), including an L0 layer, an L1 layer, an L2 layer, an L3 layer, and an L4 layer. Any minimum tree in the network structure includes a second node cluster serving as a parent node and at least one first node cluster serving as a child node, and the second node cluster is connected to the at least one first node cluster through a physical link. For example, FIG. 4 shows some minimum trees (a minimum tree 1, a minimum tree 2, and a minimum tree 3). In the minimum tree 1, the second node cluster is a parent node L4 layer-cluster 1, and there are four first node clusters, including an L3 layer-cluster 1, an L3 layer-cluster 2, an L3 layer-cluster 3, and an L3 layer-cluster 4. By analogy, the minimum tree 2 and the minimum tree 3 each include one parent node and four child nodes. That is, it may be understood that a minimum tree in this application refers to a tree including one parent node at an upper layer and all child nodes of the parent node that are at a lower layer in two adjacent layers in a network architecture, and each child node is connected to the parent node through a physical link in the minimum tree.

The first node cluster is configured to: obtain a first computing result based on a first computing input, and send the first computing result to the second node cluster through the physical link. The first computing input is a related parameter, training data, or the like of a computing task that is assigned by the computing system to each first node cluster in an initial or iterative case, and the first computing result is a result obtained through computation by the first node cluster based on the first computing input. After completing the computation, the first node cluster needs to send the first computing result to the parent node of the first node cluster through the physical link between the first node cluster and the parent node, namely, the second node cluster for aggregation. It may be understood that the first node cluster in this application refers to all child nodes in each minimum tree in the computing system. In other words, in the network structure in FIG. 4, except the L4 layer-cluster 1, each of other node clusters may serve as a role of a child node in a minimum tree, and therefore, also needs to perform the foregoing actions in the minimum tree to which the node cluster belongs.

The second node cluster is configured to: receive, through the physical link, at least one first computing result sent by the at least one first node cluster, and aggregate the at least one first computing result and a second computing result to obtain a third computing result, where the second computing result is a result obtained by the second node cluster based on a second computing input. To be specific, the second node cluster serving as the parent node not only needs to perform a computing task assigned by the computing system, to obtain the second computing result, but also needs to aggregate the second computing result and one or more first computing results obtained through computation by all child nodes in the minimum tree to which the second node cluster belongs. Further, when the second node cluster is not a root node, the second node cluster further needs to send the third computing result to a parent node in a corresponding minimum tree in which the second node cluster serves as a child node, that is, send the third computing result to a third node cluster for upper-layer aggregation. It may be understood that the second node cluster in this application refers to a parent node in each minimum tree in the computing system. In other words, in the network structure in FIG. 4, each of node clusters other than 256 clusters at the L0 layer may serve as a role of a parent node in a minimum tree.

It should be noted that a root node (for example, the L4 layer-cluster 1 in FIG. 4) serves as only a parent node, node clusters at a lowest layer (for example, the 256 clusters at the L0 layer in FIG. 4) serve as only child nodes, and each of other node clusters may serve as a first node cluster in a minimum tree, and serve as a second node cluster in another minimum tree.

In a possible implementation, any minimum tree in the network structure includes one second node cluster and k first node clusters, where k is an integer greater than or equal to 1. In other words, any minimum tree in the network structure is converged in a k: 1 manner. In FIG. 4, k = 4. Therefore, in FIG. 4, the L0 layer has 256 node clusters, the L1 layer has 64 clusters, the L2 layer has 16 clusters, the L3 layer has four clusters, and the L4 layer has one cluster. However, it may be understood that convergence proportions of all minimum trees may be the same or may be different. This is not specifically limited in this application.

Optionally, the first computing input and the second computing input include a weight, training data, an offset, and a hyperparameter, and the first computing result, the second computing result, and the third computing result are gradients. When the foregoing computing system is applied to an AI neural network, each node cluster in the computing system 10 is configured to: obtain a gradient of the node cluster through computation based on a weight, training data, an offset, and a hyperparameter that are allocated, and perform gradient aggregation between the node cluster and a parent node in a minimum tree to which the node cluster belongs. Finally, a final aggregated gradient is obtained on the root node. The root node calculates a new weight based on the final aggregated gradient and a hyperparameter such as a learning rate, and then distributes the new weight to each node cluster in the computing system, to start a next round of iterative computation.

Optionally, the second node cluster includes at least one second computing node, and the second computing node is a neural network accelerator; and the first node cluster includes at least one first computing node, and the first computing node is a neural network accelerator. In this embodiment of the present invention, one or more neural network accelerators are disposed in a node cluster, so as to implement parallel computing in a neural network.

In the computing system 10, each node cluster is responsible for aggregating computing results of the node cluster and is also responsible for aggregating computing results of a lower-layer node cluster connected to the node cluster, so that not only transmission of data from a lower layer to an upper layer is completed, but also data aggregation between node clusters is completed layer by layer in a transmission process, thereby reducing an amount of data that is to be aggregated and that is transmitted in bandwidth. In addition, because a tree networking topology is used in this embodiment of the present invention, computing and aggregation are performed between different node clusters at a same layer in parallel, thereby further improving computing and aggregation efficiency. In this way, a problem of low computing efficiency in large-scale distributed training is resolved.

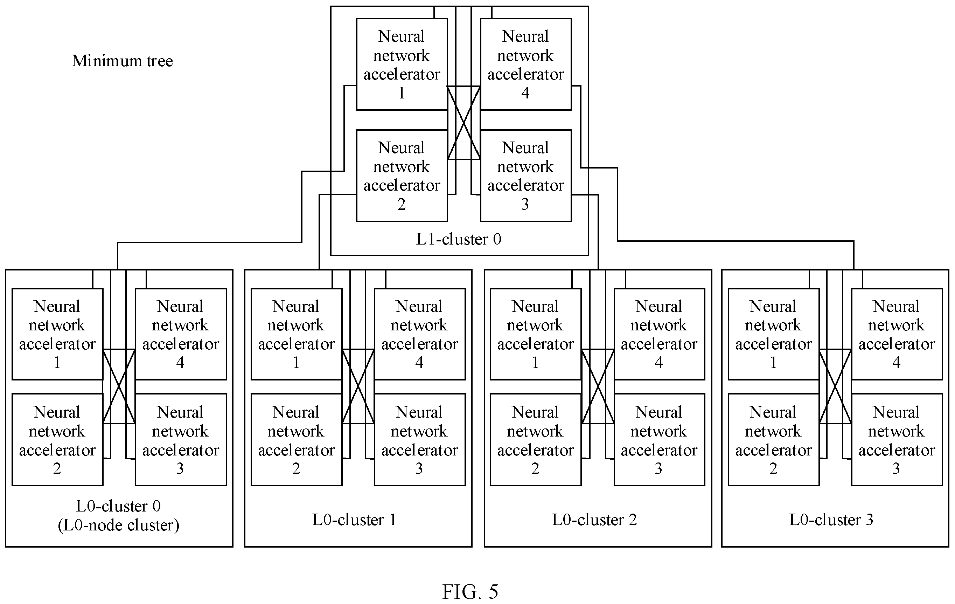

FIG. 5 is a schematic structural diagram of a connection relationship between node clusters in a minimum tree according to an embodiment of the present invention. As shown in FIG. 5, a second node cluster (for example, an L1-cluster 0) includes k (k = 4 is used as an example in FIG. 5) second computing nodes (for example, an NNA 1, an NNA 2, an NNA 3, and an NNA 4 in the L 1-cluster 0), and any one first node cluster (using an L0-cluster 0 as an example) of k first node clusters (for example, the L0-cluster 0, an L0-cluster 1, an LO-cluster 2, and an L0-cluster 3) includes k first computing nodes (for example, an NNA 1, an NNA 2, an NNA 3, and an NNA 4 in the L0-cluster 0). In any minimum tree in a network structure, the k second computing nodes in the second node cluster one-to-one correspond to the k first node clusters, and any one of the k second computing nodes is connected to the k first computing nodes in the corresponding first node cluster through a physical link. In FIG. 5, the NNA 1 in the L1-cluster 0 corresponds to the L0-cluster 0, and the NNA 1 in the L1-cluster 0 is connected to the L0-cluster 0 through a physical link. The NNA2 in the L1-cluster 0 corresponds to the L0-cluster 1, and the NNA 2 in the L1-cluster 0 is connected to the L0-cluster 1 through a physical link. The NNA 3 in the L1-cluster 0 corresponds to the L0-cluster 2, and the NNA 3 in the L1-cluster 0 is connected to the L0-cluster 2 through a physical link. The NNA4 in the L1-cluster 0 corresponds to the L0-cluster 3, and the NNA4 in the L1-cluster 0 is connected to the L0-cluster 3 through a physical link.

It may be understood that the connection relationship between the node clusters in FIG. 5 is merely an example implementation in this embodiment of the present invention. A structure of a node cluster and a connection relationship between node clusters in this embodiment of the present invention include but are not limited to the foregoing structure and connection relationship.

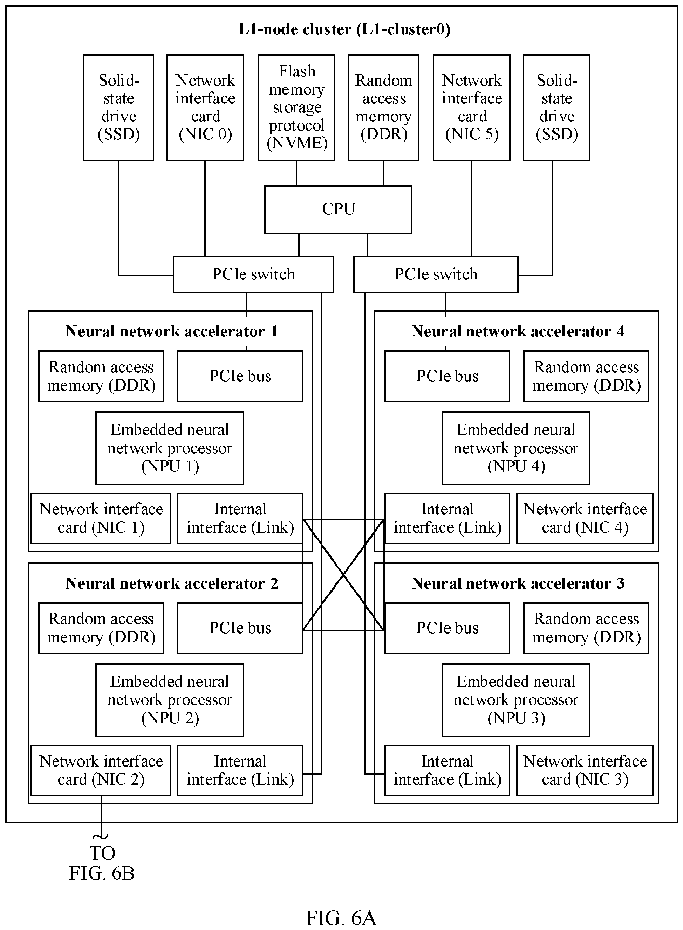

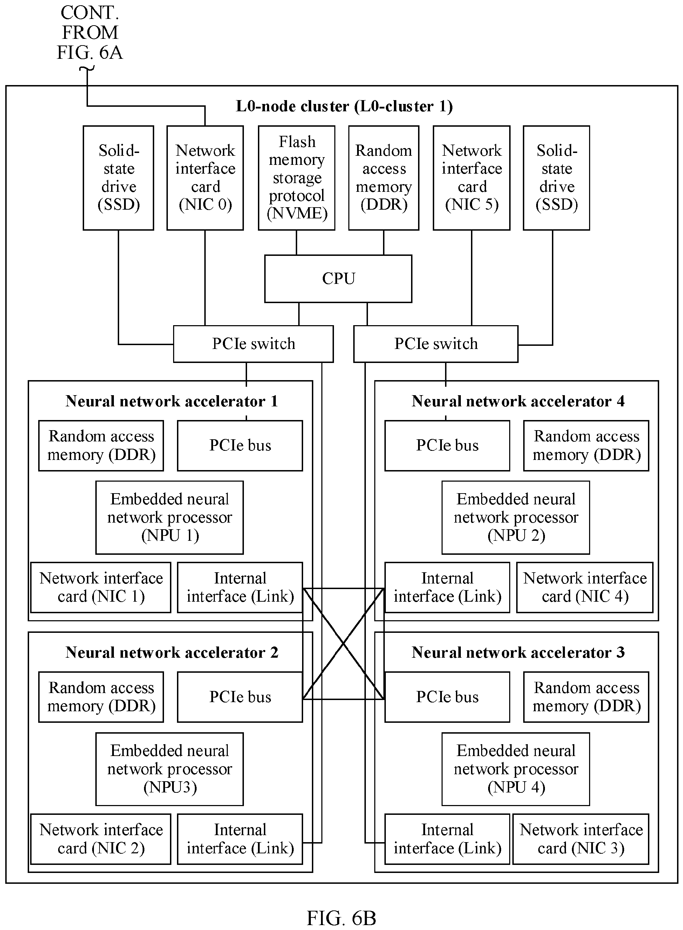

The following uses a parent node and one child node in the foregoing minimum tree as an example, for example, a connection between an NPU 1 in the L1-cluster 0 and the L0-cluster 0, to describe a structure and a connection relationship of the first node cluster and the second node cluster. FIG. 6A and FIG. 6B are a schematic diagram of a parent-child node structure and a connection relationship in a minimum tree according to an embodiment of the present invention. In FIG. 6A and FIG. 6B, any node cluster (including the foregoing first node cluster or second node cluster) may include the following functional modules:

A main control CPU is responsible for management and control of a computing task on a node, control of interaction between nodes, and preprocessing and post-processing of data (if preprocessing or post-processing needs to be performed). For example, the main control CPU may be X86.

An SSD and an NVMe are local high-speed storage, and are configured to store a system and training data such as a first computing input and a second computing input.

A NIC 1, a NIC 2, a NIC 3, and a NIC 4 are network interfaces, and each are configured to be directly connected, through a physical link, to a child node in a node cluster to which the network interface belongs. For example, in FIG. 6A and FIG. 6B, a NIC 1 in an L1-cluster 0 is directly connected to a network adapter NIC 0 in a child node L0-cluster 0 of the L1-cluster 0 through a physical link. Optionally, in FIG. 6A and FIG. 6B, any second computing node is directly connected to k first computing nodes in a corresponding first node cluster through a physical link, and a first computing result sent by each first node cluster is received through the physical link.

A NIC 0 and a NIC 5 are network interfaces on a neural network accelerator, and each are configured to perform interaction and communication between the computing node and the outside. To be specific, the NIC 0 is configured to: when a node cluster serves as a child node, to be directly and physically connected to one of a corresponding NIC 1, NIC 2, NIC 3, and NIC 4 on a parent node, and send the first computing result to the second node cluster through the physical link. The NIC 5 is mainly configured to serve as an interface of another network plane (for example, a user plane, a control plane, or a management plane).

APCIe switch is a PCIe bus switch, and is configured to interconnect PCIe devices and interconnect X86 main control CPUs.

An NN accelerator is a neural network accelerator, may also be referred to as an accelerated NNA, and is usually mounted to a PCIe bus by using a PCIe endpoint (EP) device.

An NN accelerator/DDR is a memory on the neural network accelerator, and is used for local storage in a computing process.

An NN accelerator/PCIe is a PCIe bus interface on the neural network accelerator, and is used for interconnection and communication inside the computing node.

An NN accelerator/link is a high-speed interconnection link between neural network accelerators, and is configured to accelerate high-speed data exchange between NNAs.

An NN accelerator/NPU is an embedded neural network processor on the neural network accelerator, and is used for computation of various neural network operators.

When the computing system in this application is applied to an AI neural network field, in an AI training process, a processing process of each functional module in the foregoing node cluster is as follows:
(1) An AI application program and an AI framework are run on the main control CPU. After the CPU runs, the AI application program starts training, obtains necessary inputs such as a neural network model, an initial parameter, and training data, and invokes the AI framework for training.
(2) The main control CPU performs graph analysis and graph optimization on the neural network model by using the AI framework, converts the model into a computing graph, and then transmits, based on a graph scheduling algorithm, a computing operator (for example, the first computing input or the second computing input in this application) to the neural network accelerator NN accelerator (each first computing node in the first node cluster or each second computing node in the second node cluster) for execution.
(3) After receiving a computing task, the NN accelerator completes, by using the NPU, computation described by the operator, and stores a computing result (for example, the first computing result or the second computing result in this application) in a memory DDR of a device.
(4) Data exchange between a plurality of NNAs is generally involved in a computing process. To improve data exchange efficiency, generally, data is exchanged through a high-speed interconnect bus link between devices.
(5) After completing computation, the NN accelerator may send a computing result to the main control CPU through the PCIe bus, or send the computing result to another node by using a NIC.

In a specific computing process, based on the structure of the node cluster and the connection relationship between the node clusters in FIG. 6A and FIG. 6B, an embodiment of the present invention provides a distributed computing solution, to be specific, computing tasks on each node cluster are distributed to a plurality of computing nodes (for example, the NN accelerators in FIG. 6A and FIG. 6B) in the node cluster for distributed computing. Further, distributed aggregation may be performed after each computing node completes a computing task. Specifically, the following two implementations may be included.

In a possible implementation, each of k first node clusters in any minimum tree is specifically configured to: distribute a first computing input to the k first computing nodes for distributed computing, to obtain k first distributed computing results; perform distributed aggregation on the k first computing nodes based on the k first distributed computing results respectively, to obtain one slice of the first computing result on each first computing node; and finally, synchronously or asynchronously send, by using the k first computing nodes, k slices of the first computing result to a corresponding second computing node for aggregation. Correspondingly, a second node cluster is specifically configured to: distribute a second computing input to k second computing nodes for distributed computing, to obtain k second distributed computing results, where the k second distributed computing results are the second computing result; receive, respectively by using the k second computing nodes, the k slices of the first computing result that are sent by the k first computing nodes in the corresponding first node cluster; aggregate, respectively by using the k second computing nodes, the second distributed computing result obtained through computation by each second computing node and the k slices of the first computing result of the corresponding first node cluster; and finally, perform distributed aggregation on results obtained through aggregation by using all of the k second computing nodes, to obtain one slice of the third computing result on each second computing node.

In this embodiment of the present invention, computing tasks of the first node cluster serving as a child node are distributed to the k first computing nodes for parallel processing, and after a computing result of each first computing node is obtained, parallel aggregation is performed between the k first computing nodes. Moreover, computing tasks of the second node cluster serving as a parent node are distributed to the k second computing nodes for parallel processing, and after a computing result of each second computing node is obtained, the second computing node locally aggregates computing results sent by the corresponding k first node clusters. In addition, the process between the k second computing nodes is a parallel operation. Finally, distributed aggregation between nodes is performed once again between the k second computing nodes, to obtain a final aggregation result of the second node cluster, thereby greatly improving computing and aggregation efficiency.

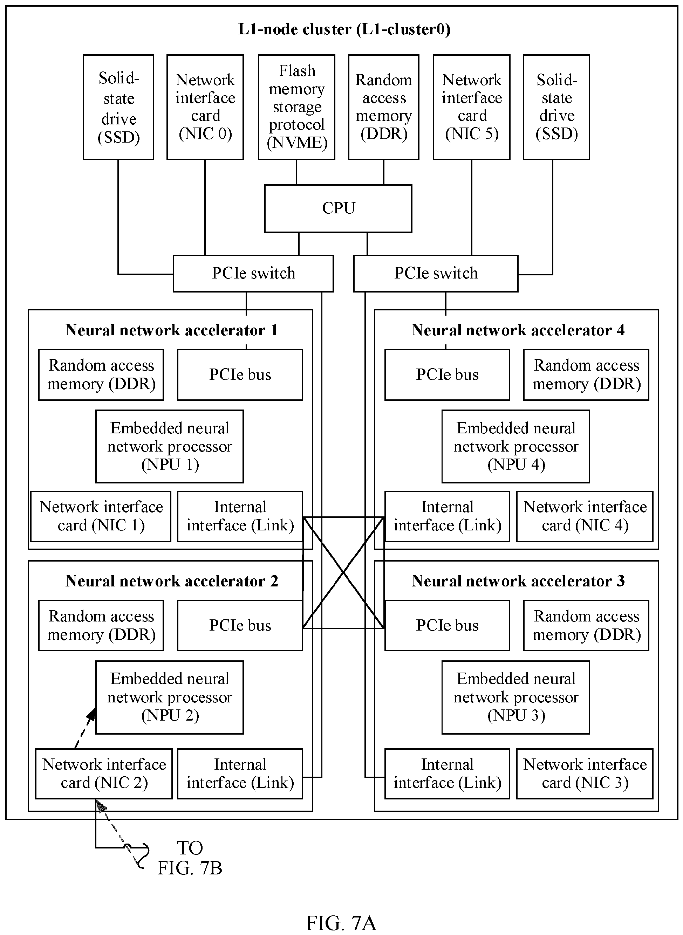

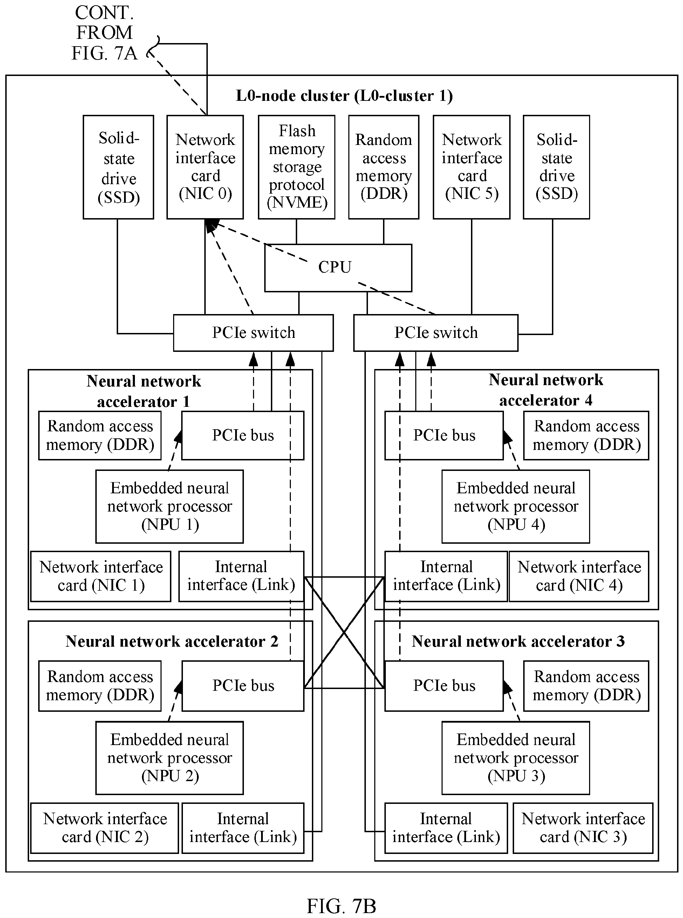

In the foregoing implementation, based on the interconnection relationship in FIG. 5, the L1-cluster 0 and the L0-cluster 1 constitute a hierarchical structure. To be specific, five computing nodes: {an L1-cluster 0.NPU 2, an L0-cluster 0.NPU 1, an L0-cluster 0.NPU 2, an L0-cluster 0.NPU 3, and an L0-cluster 0.NPU 4} constitute one computing and aggregation unit in a minimum tree. The L1-cluster 0.NPU 2 is one second computing node in a second node cluster in this embodiment of the present invention, and the other four NPUs serve as four first computing nodes in a first node cluster corresponding to the second computing node. Each NPU in the L0-cluster 1 completes gradient computation, and after distributed gradient aggregation is completed between the four NPUs in the L0-cluster 0, each NPU sends aggregated gradient data to the aggregation node L1-cluster 0.NPU 2 of the NPU. Upstream transmission paths are shown by dashed lines in FIG. 7A and FIG. 7B. FIG. 7A and FIG. 7B are a schematic diagram of an upstream data transmission path between node clusters according to an embodiment of the present invention. There are a total of four transmission paths:
L0-cluster 1: NPU 1 -> PCIe -> PCIe switch -> NIC 0 -> L1-cluster 0: NIC 2 -> NPU 2
L0-cluster 1: NPU 2 -> PCIe -> PCIe switch -> NIC 0 -> L1-cluster 0: NIC 2 -> NPU 2
L0-cluster 1: NPU 3 -> PCIe -> PCIe switch -> NIC 0 -> L1-cluster 0: NIC 2 -> NPU 2
L0-cluster 1: NPU 4 -> PCIe -> PCIe switch -> NIC 0 -> L1-cluster 0: NIC 2 -> NPU 2

In another possible implementation, any one of k first node clusters is specifically configured to: distribute a first computing input to the k first computing nodes for distributed computing, to obtain k first distributed computing results; perform aggregation on a specified first computing node in the k first computing nodes based on the k first distributed computing results, to obtain the first computing result; and send, by using the specified first computing node, the first computing result to a corresponding second computing node for aggregation. Correspondingly, the second node cluster is specifically configured to: distribute a second computing input to k second computing nodes for distributed computing, to obtain k second distributed computing results; receive, by using each of the k second computing nodes, the first computing result sent by the specified first computing node in the corresponding first node cluster, and aggregate the first computing result and the obtained second distributed computing results; and finally aggregate, by using a specified second computing node in the k second computing nodes, results obtained through aggregation by using all of the k second computing nodes, to obtain the third computing result.

A difference from the distributed computing and distributed aggregation in the foregoing implementation lies in that, in this implementation, computing tasks of the first node cluster serving as a child node are distributed to the k first computing nodes for parallel processing, and after a computing result of each first computing node is obtained, parallel aggregation is performed on the specified first computing node in the k first computing nodes. Moreover, computing tasks of the second node cluster serving as a parent node are distributed to the k second computing nodes for parallel processing, and after a computing result of each second computing node is obtained, the second computing node aggregates computing results sent by the corresponding k first node clusters. In addition, the process between the k second computing nodes is a parallel operation. Finally, distributed aggregation between nodes is performed once again between the k second computing nodes, to obtain a final aggregation result of the second node cluster.

It should be noted that in the first computing result, the second computing result, and the third computing result, the first computing result is a result obtained after the first node cluster completes computing and aggregation, and the third computing result is obtained by the second node cluster by aggregating the first computing result and the second computing result. Therefore, the third computing result is also an aggregated result. The second computing result is one or more computing results that are obtained through computation by the second node cluster or all the second computing nodes in the second node cluster but have not been aggregated.

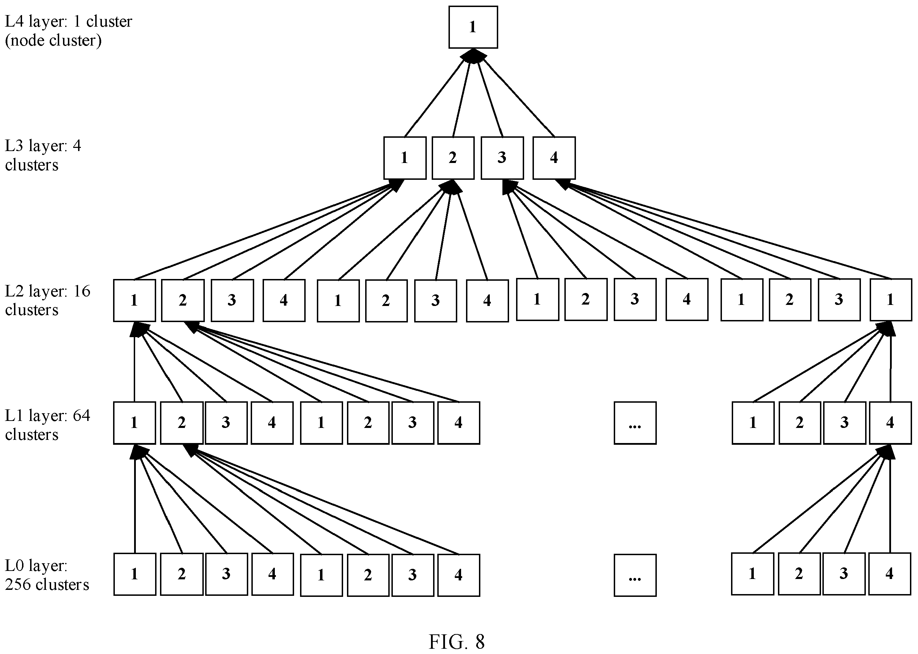

FIG. 8 is a schematic diagram of upstream aggregation in a computing system according to an embodiment of the present invention. In FIG. 8, aggregation may be performed in each minimum tree according to the foregoing procedure, gradient aggregation between all minimum trees at a same layer is performed in parallel, and finally, aggregation of the entire computing system, that is, an entire tree, is completed. For a specific aggregation manner in each minimum tree in the computing system, refer to the foregoing aggregation procedure of the minimum tree in one of FIG. 5, FIG. 6A and FIG. 6B, and FIG. 7A and FIG. 7B. Details are not described herein again.

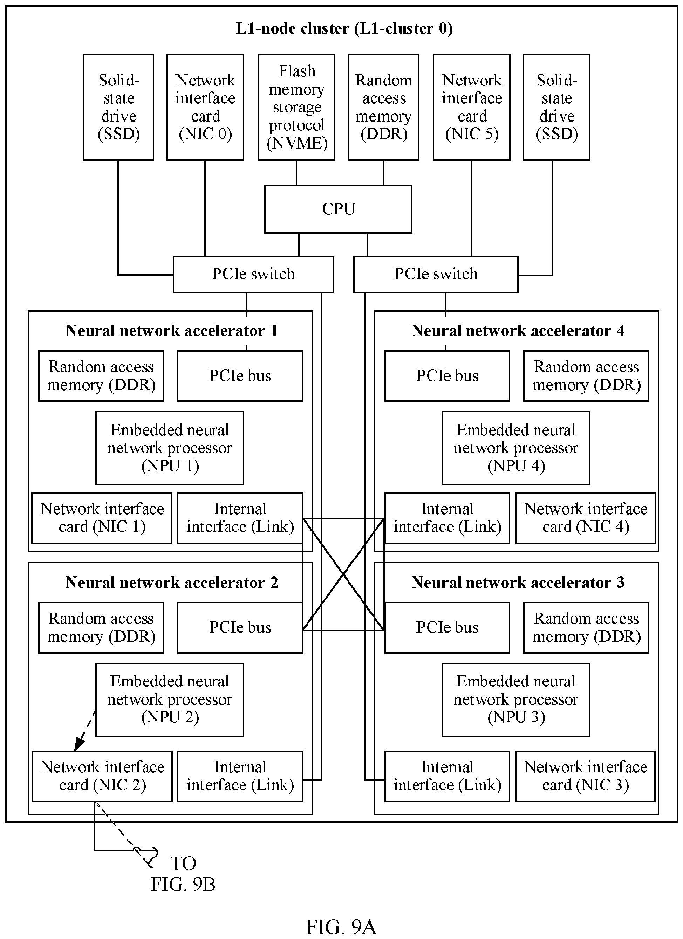

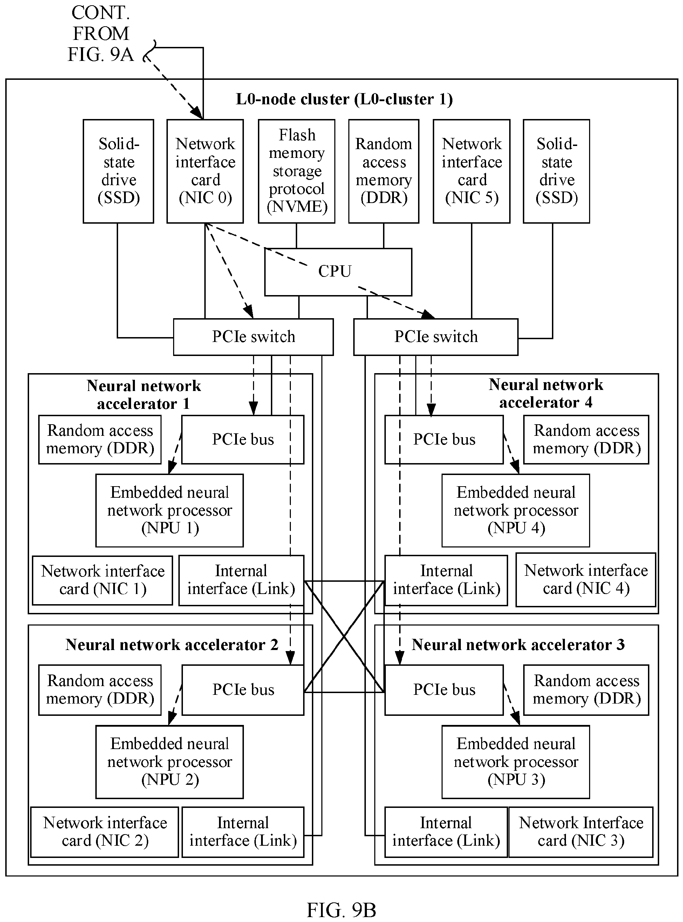

Based on the foregoing data, in the computing system, in a process of aggregation from a node cluster at a lower layer to a node cluster at an upper layer, an embodiment of the present invention further provides a solution for delivering an initial or updated related parameter (for example, a first computing input or a second computing input) from the node cluster at the upper layer to the node cluster at the lower layer. FIG. 9A and FIG. 9B are a schematic diagram of a downstream data transmission path between node clusters according to an embodiment of the present invention.

Based on the interconnection relationship in FIG. 5, the L1-cluster 0 and the L0-cluster 1 constitute a hierarchical structure. To be specific, five computing nodes: {an L1-cluster 0.NPU 2, an L0-cluster 0.NPU 1, an L0-cluster 0.NPU 2, an L0-cluster 0.NPU 3, and an L0-cluster 0.NPU 4} constitute one computing and aggregation unit in a minimum tree. The L1-cluster 0.NPU 2 is one second computing node in a second node cluster in this embodiment of the present invention, and the other four NPUs serve as four first computing nodes in a first node cluster corresponding to the second computing node. When receiving a new weight parameter (for example, a first parameter in this application), the L1-cluster 0.NPU 2 needs to synchronize the new weight parameter with all first computing nodes connected to the L1-cluster 0.NPU 2. To improve efficiency, the L1-cluster 0.NPU 2 scatters the weight to all the first computing nodes. The weight may be sent to all the first computing nodes in the same node cluster in a broadcast manner through an internal high-speed physical link. As shown by dashed lines in FIG. 9A and FIG. 9B, there are a total of four downstream transmission paths for weight data:
L1-cluster 0: NPU 2 -> NIC 2 ->L0-cluster 1: NIC 0 -> PCIe switch -> PCIe -> NPU 1
L1-cluster 0: NPU 2 -> NIC 2 ->L0-cluster 1: NIC 0 -> PCIe switch -> PCIe -> NPU 2
L1-cluster 0: NPU 2 -> NIC 2 ->L0-cluster 1: NIC 0 -> PCIe switch -> PCIe -> NPU 3
L1-cluster 0: NPU 2 -> NIC 2 ->L0-cluster 1: NIC 0 -> PCIe switch -> PCIe -> NPU 4

For example, in a parameter delivering process, when a first computing input includes the first parameter, the second node cluster is further configured to respectively send the first parameter to the k first node clusters by using the k second computing nodes. A specific delivering process may include the following three implementations:

Implementation 1: The second node cluster sends the first parameter to the k first computing nodes in the corresponding first node cluster in parallel respectively by using the k second computing nodes. That is, the second node cluster simultaneously sends the first parameter to the k first computing nodes in the corresponding first node cluster. Therefore, the k first computing nodes simultaneously receive the first parameter sent by the corresponding second computing nodes. In this implementation, a parameter delivering speed is high, but the second computing node needs to send the complete first parameter for k times.

Implementation 2: The second node cluster sends the first parameter to one first computing node in the corresponding first node cluster by using the k second computing nodes, so that the one first computing node broadcasts the first parameter between other first computing nodes in the same cluster. That is, the second computing node first sends the first parameter to a specified first computing node in the corresponding first node cluster. Therefore, the specified first computing node in the k first computing nodes first receives the first parameter, then, the first computing node that receives the first parameter broadcasts the first parameter through a high-speed physical link between computing nodes in the same cluster, and finally, each first computing node obtains the complete first parameter.

Implementation 3: The second node cluster sends, by using each second computing node, the first parameter divided into k slices respectively to the k first computing nodes in the corresponding first node cluster, so that the first parameter is broadcast between the k first computing nodes. That is, the second computing node divides the first parameter into k slices, and then sends each slice to a different first computing node. Therefore, all the k first computing nodes can receive a slice of the first parameter, and then the k first computing nodes each synchronizes a slice with each other through a high-speed physical link. In this way, transmission bandwidth between the second computing node and the first node cluster can be reduced, a parameter delivering time can also be reduced, and parameter delivering efficiency can be improved.

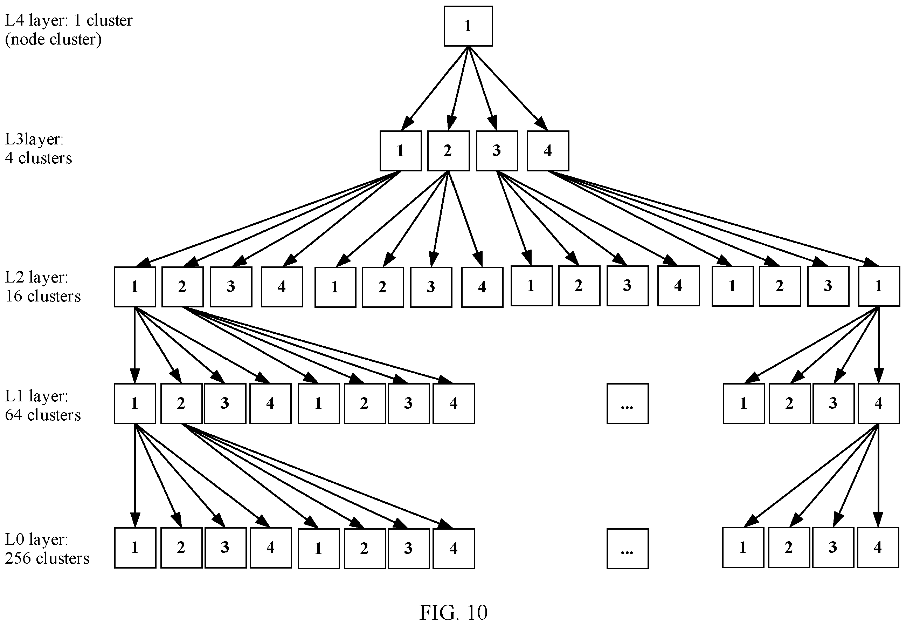

FIG. 10 is a schematic diagram of delivering of a parameter in a computing system according to an embodiment of the present invention. In FIG. 10, a parameter may be delivered in each minimum tree according to the foregoing procedure, parameters are synchronized between different minimum trees in parallel, and finally, delivering of an initial parameter or an updated parameter, is completed in the entire computing system, that is, an entire tree. For a specific parameter delivering procedure in each minimum tree in the computing system, refer to the procedures in the foregoing implementation 1, implementation 2, and implementation 3. Details are not described herein again.

In this application, to reduce a time consumed in end-to-end (E2E) transmission and improve efficiency, in a possible implementation, a pipeline algorithm is used to increase an overlap ratio for computing and transmission. The time consumed in transmission is hidden as much as possible in a computing process. A processing manner is as follows:
1. The computing system in this application performs aggregation and transmission by using a gradient as a granularity.
2. After dependency of a gradient parameter is canceled, the gradient parameter enters a pipeline for aggregation and transmission. When the aggregation and transmission is being performed, a new gradient parameter is calculated.
3. The computing system in this application divides a large gradient into small slices for aggregation and transmission, and performs aggregation computing and transmission in parallel.
4. A plurality of small slices are transmitted in parallel, to form a multi-level pipeline.

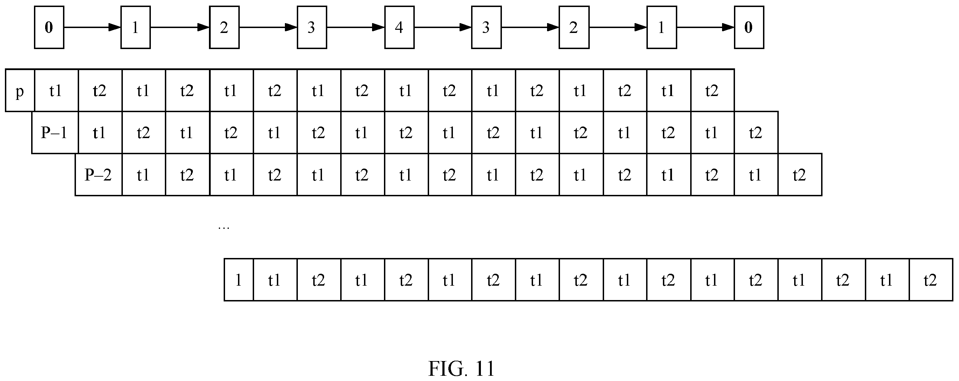

FIG. 11 is a schematic diagram of an aggregation and synchronization pipeline algorithm according to an embodiment of the present invention. Gradient aggregation and weight synchronization form a multi-level pipeline, to perform transmission in parallel. A time consumed in transmission is hidden in a time consumed in computing. A size of each small slice is m, a time consumed for processing each small slice on a node is t1, and a time consumed for transmitting each small slice between nodes is t2 = m/B, where B is effective bandwidth for transmission between the nodes.

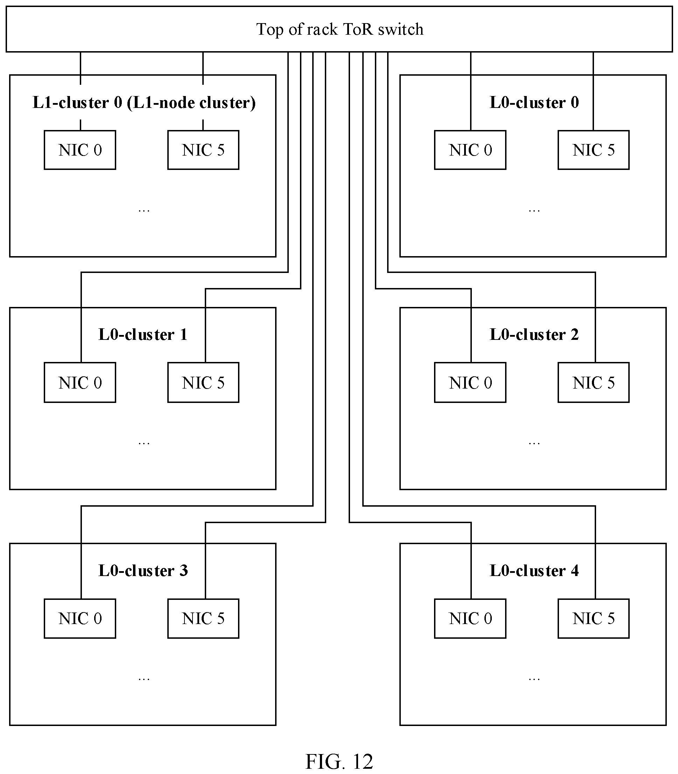

Based on the foregoing procedures for aggregation and delivering of the parameter in the computing system, in a possible implementation, this application further provides another system connection manner. FIG. 12 is a schematic architectural diagram of a minimum tree in another tree topology based computing system according to an embodiment of the present invention. A minimum tree in the computing system 20 further includes a top of rack switch. The top of rack switch is directly connected to each of a plurality of node clusters through a physical link. A second node cluster is connected to at least one first node cluster through the top of rack switch. To be specific, minimum trees in the computing system 20 may be connected by using the top of rack ToR switch, to form a slim-tree networking topology. As shown in FIG. 11, a total of six clusters: an L1-cluster 0, an L0-cluster 0, an L0-cluster 1, an L0-cluster 2, an L0-cluster 3, and an L0-cluster 4 are connected to a same ToR, to constitute L0 and L1 layers of a slim tree according to a convergence ratio of 5:1 (in an actual deployment process, another convergence ratio may also be selected based on an actual situation). The L1-cluster 0 is a parent node, and the L0-cluster 0, the L0-cluster 1, the L0-cluster 2, the L0-cluster 3, and the L0-cluster 4 are five child nodes. It may be understood that for an internal structure of each node cluster and a specific connection relationship between node clusters, refer to the structure and the connection manner in FIG. 6A and FIG. 6B. Details are not described herein again.

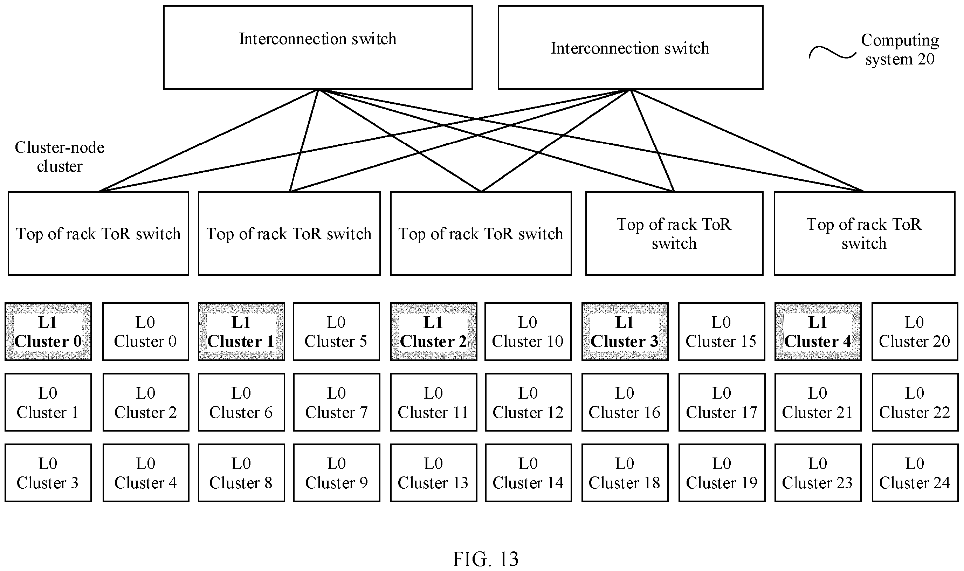

It may be understood that in the foregoing minimum tree architecture in FIG. 12, a slim tree may be formed through layered stacking. FIG. 13 is a schematic architectural diagram of a large-scale computing system according to an embodiment of the present invention. In the figure, five minimum trees provided in FIG. 12 are included. If a scale of a group is large, a plurality of layers may be expanded to form a multi-layer slim tree. Gradient aggregation and weight synchronization may be completed based on related descriptions of an aggregation algorithm and a parameter delivering algorithm in the embodiments corresponding to FIG. 5 to FIG. 11 in this application. Details are not described herein again.

It should be noted that in this embodiment of the present invention, scalability of a large-scale distributed neural network training group is implemented based on a tree networking topology, a layer-by-layer accumulation algorithm, and a multi-layer pipeline algorithm. The networking topology and algorithm are also applicable to other similar computing fields. With reference to the idea and algorithm implementation, the networking topology and algorithm are used to implement high-performance computing in this field.

When the computing system in this application is applied to the field of the large-scale distributed neural network training group, existing network plane planning may remain unchanged, to meet requirements of management, access, storage, control, and the like of a group node. Based on an existing network plane, only a distributed deep neural network (DDN) plane needs to be newly planned, and gradient data aggregation and weight parameter synchronization are dedicated by using the plane.

Next, NICs between computing nodes in a node cluster are connected in a back-to-back physical direct connection manner, to form a high-bandwidth low-latency channel between the nodes. A plurality of node clusters are converged in a k: 1 manner, to form a tree topology. A tree group system may be formed through layered stacking. Then, the DDN plane is mapped to a physical direct connection topology between the node clusters.

In addition, in this application, a plurality of NNAs, that is, computing nodes (for example, four computing nodes) in this application, may be configured for each node cluster, to form one cluster. In a data parallel training method, each NNA(for example, a first computing unit) in a cluster (for example, a first node cluster) first independently completes gradient computing, and then completes gradient aggregation between the plurality of NNAs in the cluster. After the aggregation is completed, an aggregated gradient is transmitted to a parent node (for example, a second node cluster) of the cluster. Each NNA (for example, a second computing unit) in the parent node cluster not only needs to complete gradient computing responsible by the NNA, but also needs to obtain gradient data aggregated by all child nodes, and aggregate the gradient data and a gradient obtained through computation by the NNA to obtain one piece of data. Then, aggregation is performed again between all NNAs in the parent node cluster. After the aggregation is completed, an aggregated gradient is transmitted to a parent node (for example, a third node cluster) of the parent node cluster.

Therefore, each node cluster in this application is responsible for not only gradient computing, but also gradient aggregation, routing, and transfer. Because each node cluster sends an aggregated gradient, amounts of data transmitted between layers in a tree are uniform. In this manner, in the entire group, execution is performed in parallel, and one piece of complete gradient data including computing results of all nodes can be obtained after aggregation is completed on a root node.

A new weight parameter can be calculated based on the foregoing gradient data. Once a new weight is obtained through calculation, the new weight may be transmitted downward along the tree topology, and the new weight is synchronized with all worker nodes (that is, the first computing node and the second computing node in this application). To improve downstream transmission efficiency, a parent node delivers the weight to a child node of the parent node, and after receiving the weight, the child node broadcasts the weight in the cluster. In this case, sending from the parent node to the child node and sending from the child node to a child node are performed in parallel, and a high-speed link in the cluster is fully used. In addition, to increase a ratio of computing to a consumed time and reduce a stall time of a NNA, the foregoing aggregation and synchronization are performed in a pipeline manner. For a deep neural network, after back propagation is performed, gradient data is computed, and dependency is canceled, the gradient data can enter a pipeline. Processing of the gradient aggregation and synchronization and the back propagation are overlapped.

In conclusion, when the computing system in this application is applied to the large-scale distributed neural network training group, the following beneficial effects are achieved:
1. An AI data network plane is provided, and the AI data network plane uses back-to-back direct connection networking and may use the RDMA over Converged Ethernet (RoCE) protocol, where the RoCE is a network protocol that allows remote direct memory access (RDMA) by using the Ethernet. In this way, bandwidth is high and a latency is low, so that a performance requirement of a deep neural network training service is met. The AI data network plane is decoupled from another network plane, so as to avoid mutual interference, save a large quantity of switch resources, reduce investment costs, and reduce network performance optimization and operation and maintenance costs.
2. The computing system in this application uses a tree (which may be referred to as a slim tree in this application) networking topology. Each worker node is responsible for not only gradient computing, but also gradient aggregation and parameter synchronization. Amounts of data transmitted between nodes in the entire tree are uniform, and amounts of data transmitted between layers of the tree are also uniform. In this way, neither a traffic hotspot nor a computing hotspot exists globally.
3. If the computing system in this application is used, when a quantity of nodes is increased, a quantity of layers of the tree is increased. Each time a layer is increased, the quantity of nodes is increased fourfold. However, a time consumed in gradient aggregation and parameter synchronization on an E2E path is increased by overheads of a time consumed for passing through one node and two sides. In this way, attenuation of a ratio of computing to a consumed time is low, and linearity of a speed-up ratio is better.
4. The computing system in this application uses a pipeline, to hide a time for gradient aggregation and transmission in a computing time, thereby effectively reducing a stall time of a computing node, increasing the ratio of computing to a consumed time, and further improving efficiency of the entire group.

Therefore, the computing system provided in this application can obtain a stable speed-up ratio in a large-scale group, and is suitable for constructing a large-scale distributed training group.

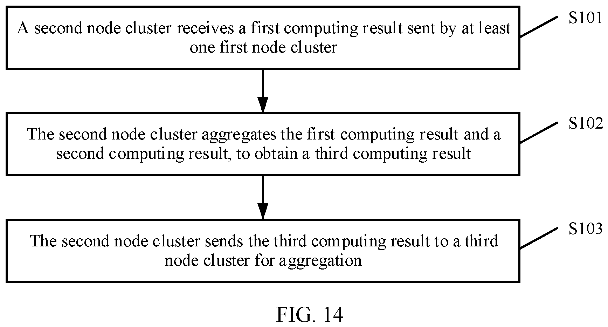

FIG. 14 is a schematic flowchart of a computing method according to an embodiment of the present invention. The computing method may be applied to the computing system shown in FIG. 5 to FIG. 13. The following provides a description from a second node cluster side with reference to FIG. 14. The method may include the following step S101 to step S103.

Step S101: A second node cluster receives a first computing result sent by at least one first node cluster, where the first computing result is a result obtained by each of the at least one first node cluster based on a first computing input, the first node cluster and the second node cluster are in any minimum tree of a same tree network structure, and the second node cluster is a parent node of the at least one first node cluster.

Step S102: The second node cluster aggregates the first computing result and a second computing result, to obtain a third computing result, where the second computing result is a result obtained by the second node cluster based on a second computing input.

Step S103: The second node cluster sends the third computing result to a third node cluster for aggregation, where the third node cluster is in the tree network topology, and the third node cluster is a parent node of the second node cluster.

In a possible implementation, the second node cluster includes k second computing nodes, and any one of the k first node clusters includes k first computing nodes; and in any minimum tree in the network structure, the k second computing nodes in the second node cluster one-to-one correspond to the k first node clusters, and any one of the k second computing nodes is connected to the k first computing nodes in the corresponding first node cluster through a physical link.

In a possible implementation, that the second node cluster aggregates the first computing result and the second computing result, to obtain a third computing result is specifically: distributing, by the second node cluster, the second computing input to the k second computing nodes for distributed computing, to obtain k second distributed computing results, where the k second distributed computing results are the second computing result; receiving, by the second node cluster respectively by using the k second computing nodes, k slices of the first computing result that are sent by the k first computing nodes in the corresponding first node cluster; aggregating, by the second node cluster respectively by using the k second computing nodes, the second distributed computing result obtained through computation by each second computing node and the k slices of the first computing result of the corresponding first node cluster; and performing, by the second node cluster, distributed aggregation on results obtained through aggregation by using all of the k second computing nodes, to obtain one slice of the third computing result on each second computing node.

In a possible implementation, that the second node cluster aggregates the first computing result and the second computing result, to obtain a third computing result is specifically: distributing, by the second node cluster, the second computing input to the k second computing nodes for distributed computing, to obtain k second distributed computing results; receiving, by the second node cluster by using each of the k second computing nodes, the first computing result sent by the specified first computing node in the corresponding first node cluster, and aggregating the first computing result and the obtained second distributed computing results; and aggregating, by the second node cluster by using a specified second computing node in the k second computing nodes, results obtained through aggregation by using all of the k second computing nodes, to obtain the third computing result.

In a possible implementation, the computing method further includes a step: sending, by the second node cluster, the first parameter to the k first node clusters respectively by using the k second computing nodes.

In a possible implementation, the sending, by the second node cluster, the first parameter to the k first node clusters respectively by using the k second computing nodes specifically includes the following three implementations:
Implementation 1: The second node cluster sends, by using each second computing node, the first parameter divided into k slices respectively to the k first computing nodes in the corresponding first node cluster, so that the first parameter is broadcast between the k first computing nodes.
Implementation 2: The second node cluster sends the first parameter to the k first computing nodes in the corresponding first node cluster in parallel respectively by using the k second computing nodes.
Implementation 3: The second node cluster sends the first parameter to one first computing node in the corresponding first node cluster by using the k second computing nodes, so that the one first computing node broadcasts the first parameter between other first computing nodes in the same cluster.

In a possible implementation, the first computing input and the second computing input include a weight, training data, an offset, and a hyperparameter, and the first computing result, the second computing result, and the third computing result are gradients.

It should be noted that, for a specific procedure of the computing method described in this embodiment of the present invention and a related function of the second node cluster serving as an execution body, refer to related descriptions in the embodiments of the computing system in FIG. 4 to FIG. 13. Details are not described herein again.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that the embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a magnetic disk, an optical disc, a read-only memory (ROM), or a random access memory (RAM).

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the appended set of claims.

## Claims

1. A tree topology based computing system for large-scale distributed training, comprising: a plurality of node clusters, wherein the plurality of node clusters constitute a multi-layer network structure in a tree topology manner, any minimum tree in the network structure comprises a second node cluster serving as a parent node and at least one first node cluster serving as a child node, and the second node cluster is connected to the at least one first node cluster through a physical link, the second node cluster comprises at least one second computing node, each first node cluster comprises at least one first computing node, and the second computing node and the first computing node are neural network accelerators, wherein
each of the at least one first node cluster is configured to: obtain a first computing result based on a first computing input, and send the first computing result to the second node cluster through the physical link; and
the second node cluster is configured to: receive, through the physical link, at least one first computing result sent by the at least one first node cluster, and aggregate the at least one first computing result and a second computing result to obtain a third computing result, wherein the second computing result is a result obtained by the second node cluster based on a second computing input, and the at least one first computing result, the second computing result, and the third computing result are gradients,
wherein the second node cluster is further configured to send the third computing result to a third node cluster for aggregation, wherein the third node cluster is a parent node of the second node cluster.

2. The computing system according to claim 1, wherein the second node cluster comprises k second computing nodes, the at least one first node cluster comprises k first node clusters, any one of the k first node clusters comprises k first computing nodes, and k is an integer greater than or equal to 1; and
in the minimum tree in the network structure, the k second computing nodes in the second node cluster one-to-one correspond to the k first node clusters, and any one of the k second computing nodes is connected to the k first computing nodes in a corresponding first node cluster through the physical link.

3. The computing system according to claim 2, wherein any one of the k first node clusters is specifically configured to:
distribute the first computing input to the k first computing nodes for distributed computing, to obtain k first distributed computing results;
perform distributed aggregation on the k first computing nodes based on the k first distributed computing results respectively, to obtain one slice of the first computing result on each first computing node; and
synchronously or asynchronously send, by using the k first computing nodes, k slices of the first computing result to a corresponding second computing node for aggregation.

4. The computing system according to claim 3, wherein the second node cluster is specifically configured to:
distribute the second computing input to the k second computing nodes for distributed computing, to obtain k second distributed computing results, wherein the k second distributed computing results are the second computing result;
receive, respectively by using the k second computing nodes, the k slices of the first computing result that are sent by the k first computing nodes in the corresponding first node cluster;
aggregate, respectively by using the k second computing nodes, the second distributed computing result obtained through computation by each second computing node and the k slices of the first computing result of the corresponding first node cluster; and
perform distributed aggregation on results obtained through aggregation by using all of the k second computing nodes, to obtain one slice of the third computing result on each second computing node.

5. The computing system according to claim 2, wherein any one of the k first node clusters is specifically configured to:
distribute the first computing input to the k first computing nodes for distributed computing, to obtain k first distributed computing results;
perform aggregation on a specified first computing node in the k first computing nodes based on the k first distributed computing results, to obtain the first computing result; and
send, by using the specified first computing node, the first computing result to a corresponding second computing node for aggregation.

6. The computing system according to claim 5, wherein the second node cluster is specifically configured to:
distribute the second computing input to the k second computing nodes for distributed computing, to obtain k second distributed computing results;
receive, by using each of the k second computing nodes, the first computing result sent by the specified first computing node in the corresponding first node cluster, and aggregate the first computing result and the obtained second distributed computing results; and
aggregate, by using a specified second computing node in the k second computing nodes, results obtained through aggregation by using all of the k second computing nodes, to obtain the third computing result.

7. The computing system according to any one of claims 2 to 6, wherein the first computing input comprises a first parameter; and the second node cluster is further configured to:
send the first parameter to the k first node clusters respectively by using the k second computing nodes.

8. The computing system according to any one of claims 1 to 7, wherein the computing system is a neural network computing system; and the first computing input and the second computing input comprise a weight, training data, an offset, and a hyperparameter.

9. A computing method using the tree topology based computing system of any of claims 1-8 comprising: comprising:
receiving (S101), by a second node cluster, a first computing result sent by at least one first node cluster, wherein the first computing result is a result obtained by each of the at least one first node cluster based on a first computing input, the first node cluster and the second node cluster are in any minimum tree of a same tree network topology, the second node cluster is a parent node of the at least one first node cluster, the second node cluster comprises at least one second computing node, each first node cluster comprises at least one first computing node, and the second computing node and the first computing node are neural network accelerators;
aggregating (S102), by the second node cluster, the first computing result and a second computing result, to obtain a third computing result, wherein the second computing result is a result obtained by the second node cluster based on a second computing input, and the at least one first computing result, the second computing result, and the third computing result are gradients; and
sending (S103), by the second node cluster, the third computing result to a third node cluster for aggregation, wherein the third node cluster is in the tree network topology, and the third node cluster is a parent node of the second node cluster.

10. The method according to claim 9, wherein the second node cluster comprises k second computing nodes, the at least one first node cluster comprises k first node clusters, and any one of the k first node clusters comprises k first computing nodes; and in the minimum tree in the network structure, the k second computing nodes in the second node cluster one-to-one correspond to the k first node clusters, and any one of the k second computing nodes is connected to the k first computing nodes in the corresponding first node cluster through a physical link.

11. The method according to claim 9 or 10, wherein the aggregating, by the second node cluster, the first computing result and the second computing result, to obtain a third computing result comprises:
distributing, by the second node cluster, the second computing input to the k second computing nodes for distributed computing, to obtain k second distributed computing results, wherein the k second distributed computing results are the second computing result;
receiving, by the second node cluster respectively by using the k second computing nodes, k slices of the first computing result that are sent by the k first computing nodes in the corresponding first node cluster;
aggregating, by the second node cluster respectively by using the k second computing nodes, the second distributed computing result obtained through computation by each second computing node and the k slices of the first computing result of the corresponding first node cluster; and
performing, by the second node cluster, distributed aggregation on results obtained through aggregation by using all of the k second computing nodes, to obtain one slice of the third computing result on each second computing node.

12. The method according to claim 9 or 10, wherein the aggregating, by the second node cluster, the first computing result and the second computing result, to obtain a third computing result comprises:
distributing, by the second node cluster, the second computing input to the k second computing nodes for distributed computing, to obtain k second distributed computing results;
receiving, by the second node cluster by using each of the k second computing nodes, the first computing result sent by a specified first computing node in the corresponding first node cluster, and aggregating the first computing result and the obtained second distributed computing results; and
aggregating, by the second node cluster by using a specified second computing node in the k second computing nodes, results obtained through aggregation by using all of the k second computing nodes, to obtain the third computing result.

13. The method according to any one of claims 9 to 12, wherein the method further comprises:
sending, by the second node cluster, a first parameter to the k first node clusters respectively by using the k second computing nodes.

14. The method according to any one of claims 9 to 13, wherein the first computing input and the second computing input comprise a weight, training data, an offset, and a hyperparameter.

## Patentansprüche

1. Rechensystem basierend auf einer Baumtopologie für großflächig verteiltes Training, umfassend: eine Vielzahl von Knotenclustern, wobei die Vielzahl von Knotenclustern eine mehrschichtige Netzstruktur in einer Baumtopologieweise darstellt, jeder minimale Baum in der Netzstruktur einen zweiten Knotencluster, der als ein übergeordneter Knoten dient, und mindestens einen ersten Knotencluster, der als ein untergeordneter Knoten dient, umfasst und der zweite Knotencluster mit dem mindestens einen ersten Knotencluster durch eine physische Verknüpfung verbunden ist, der zweite Knotencluster mindestens einen zweiten Rechenknoten umfasst, jeder erste Knotencluster mindestens einen ersten Rechenknoten umfasst und der zweite Rechenknoten und der erste Rechenknoten neuronale Netzbeschleuniger sind, wobei
jeder des mindestens einen ersten Knotenclusters zu Folgendem konfiguriert ist: Erlangen eines ersten Rechenergebnisses basierend auf einer ersten Recheneingabe und Senden des ersten Rechenergebnisses an den zweiten Knotencluster über die physische Verknüpfung; und
der zweite Knotencluster zu Folgendem konfiguriert ist: Empfangen, über die physische Verknüpfung, mindestens eines ersten Rechenergebnisses, das durch das mindestens eine erste Knotencluster gesendet wird, und Aggregieren des mindestens einen ersten Rechenergebnisses und eines zweiten Rechenergebnisses, um ein drittes Rechenergebnis zu erlangen, wobei das zweite Rechenergebnis ein Ergebnis ist, das durch den zweiten Knotencluster basierend auf einer zweiten Recheneingabe erlangt wird, und das mindestens eine erste Rechenergebnis, das zweite Rechenergebnis und das dritte Rechenergebnis Gradienten sind,
wobei der zweite Knotencluster ferner dazu konfiguriert ist, das dritte Rechenergebnis zur Aggregation an einen dritten Knotencluster zu senden, wobei der dritte Knotencluster ein übergeordneter Knoten des zweiten Knotenclusters ist.

2. Rechensystem nach Anspruch 1, wobei der zweite Knotencluster k zweite Rechenknoten umfasst, der mindestens eine erste Knotencluster k erste Knotencluster umfasst, jeder der k ersten Knotencluster k erste Rechenknoten umfasst und k eine Ganzzahl größer oder gleich 1 ist; und
in dem minimalen Baum in der Netzstruktur die k zweiten Rechenknoten in dem zweiten Knotencluster eins zu eins den k ersten Knotenclustern entsprechen und jeder der k zweiten Rechenknoten über die physische Verknüpfung mit den k ersten Rechenknoten in einem entsprechenden ersten Knotencluster verbunden ist.

3. Rechensystem nach Anspruch 2, wobei jeder der k ersten Knotencluster spezifisch zu Folgendem konfiguriert ist:
Verteilen der ersten Recheneingabe an die k ersten Rechenknoten für verteiltes Rechnen, um k erste verteilte Rechenergebnisse zu erlangen;
Durchführen verteilter Aggregation an den k ersten Rechenknoten basierend auf den jeweiligen k ersten verteilten Rechenergebnissen, um einen Ausschnitt des ersten Rechenergebnisses auf jedem ersten Rechenknoten zu erlangen; und
synchrones oder asynchrones Senden, unter Verwendung der k ersten Rechenknoten, von k Ausschnitten des ersten Rechenergebnisses zur Aggregation an einen entsprechenden zweiten Rechenknoten.

4. Rechensystem nach Anspruch 3, wobei der zweite Knotencluster spezifisch zu Folgendem konfiguriert ist:
Verteilen der zweiten Recheneingabe an die k zweiten Rechenknoten für verteiltes Rechnen, um k zweite verteilte Rechenergebnisse zu erlangen, wobei die k zweiten verteilten Rechenergebnisse das zweite Rechenergebnis sind;
Empfangen, jeweils unter Verwendung der k zweiten Rechenknoten, der k Ausschnitte des ersten Rechenergebnisses, die durch die k ersten Rechenknoten in dem entsprechenden ersten Knotencluster gesendet werden;
Aggregieren, jeweils unter Verwendung der k zweiten Rechenknoten, des zweiten verteilten Rechenergebnisses, das durch Rechnen durch jeden zweiten Rechenknoten erlangt wird, und der k Ausschnitte des ersten Rechenergebnisses des entsprechenden ersten Knotenclusters; und
Durchführen verteilter Aggregation an Ergebnissen, die durch Aggregation unter Verwendung aller k zweiten Rechenknoten erlangt werden, um einen Ausschnitt des dritten Rechenergebnisses auf jedem zweiten Rechenknoten zu erlangen.

5. Rechensystem nach Anspruch 2, wobei jeder der k ersten Knotencluster spezifisch zu Folgendem konfiguriert ist:
Verteilen der ersten Recheneingabe an die k ersten Rechenknoten für verteiltes Rechnen, um k erste verteilte Rechenergebnisse zu erlangen;
Durchführen von Aggregation an einem definierten ersten Rechenknoten in den k ersten Rechenknoten basierend auf den k ersten verteilten Rechenergebnissen, um das erste Rechenergebnis zu erlangen; und
Senden, unter Verwendung des definierten ersten Rechenknotens, des ersten Rechenergebnisses zur Aggregation an einen entsprechenden zweiten Rechenknoten.

6. Rechensystem nach Anspruch 5, wobei der zweite Knotencluster spezifisch zu Folgendem konfiguriert ist:
Verteilen der zweiten Recheneingabe an die k zweiten Rechenknoten für verteiltes Rechnen, um k zweite verteilte Rechenergebnisse zu erlangen;
Empfangen, unter Verwendung jedes der k zweiten Rechenknoten, des ersten Rechenergebnisses, das durch den definierten ersten Rechenknoten in dem entsprechenden ersten Knotencluster gesendet wird, und Aggregieren des ersten Rechenergebnisses und der erlangten zweiten verteilten Rechenergebnisse; und
Aggregieren, unter Verwendung eines definierten zweiten Rechenknotens in den k zweiten Rechenknoten, von Ergebnissen, die durch Aggregation unter Verwendung aller k zweiten Rechenknoten erlangt werden, um das dritte Rechenergebnis zu erlangen.

7. Rechensystem nach einem der Ansprüche 2 bis 6, wobei die erste Recheneingabe einen ersten Parameter umfasst; und der zweite Knotencluster ferner zu Folgendem konfiguriert ist:
Senden des ersten Parameters an die jeweiligen k ersten Knotencluster unter Verwendung der k zweiten Rechenknoten.

8. Rechensystem nach einem der Ansprüche 1 bis 7, wobei das Rechensystem ein Rechensystem eines neuronalen Netzes ist; und die erste Recheneingabe und die zweite Recheneingabe ein Gewicht, Trainingsdaten, einen Versatz und einen Hyperparameter umfassen.

9. Rechenverfahren unter Verwendung des Rechensystems basierend auf einer Baumtopologie nach einem der Ansprüche 1-8, umfassend:
Empfangen (S101), durch einen zweiten Knotencluster, eines ersten Rechenergebnisses, das durch mindestens einen ersten Knotencluster gesendet wird, wobei das erste Rechenergebnis ein Ergebnis ist, das durch jeden des mindestens einen Knotenclusters basierend auf einer ersten Recheneingabe erlangt wird, sich der erste Knotencluster und der zweite Knotencluster in einem beliebigen minimalen Baum einer gleichen Baumnetztopologie befinden, der zweite Knotencluster ein übergeordneter Knoten des mindestens einen ersten Knotenclusters ist, der zweite Knotencluster mindestens einen zweiten Rechenknoten umfasst, jeder erste Knotencluster mindestens einen ersten Rechenknoten umfasst und der zweite Rechenknoten und der erste Rechenknoten neuronale Netzbeschleuniger sind;
Aggregieren (S102), durch den zweiten Knotencluster, des ersten Rechenergebnisses und eines zweiten Rechenergebnisses, um ein drittes Rechenergebnis zu erlangen, wobei das zweite Rechenergebnis ein Ergebnis ist, das durch den zweiten Knotencluster basierend auf einer zweiten Recheneingabe erlangt wird, und das mindestens eine erste Rechenergebnis, das zweite Rechenergebnis und das dritte Rechenergebnis Gradienten sind; und Senden (S103), durch den zweiten Knotencluster, des dritten Rechenergebnisses an einen dritten Knotencluster zur Aggregation, wobei sich der dritte Knotencluster in der Baumnetztopologie befindet und der dritte Knotencluster ein übergeordneter Knoten des zweiten Knotenclusters ist.

10. Verfahren nach Anspruch 9, wobei der zweite Knotencluster k zweite Rechenknoten umfasst, der mindestens eine erste Knotencluster k erste Knotencluster umfasst und jeder der k ersten Knotencluster k erste Rechenknoten umfasst; und in dem minimalen Baum in der Netzstruktur die k zweiten Rechenknoten in dem zweiten Knotencluster eins zu eins den k ersten Knotenclustern entsprechen und jeder der k zweiten Rechenknoten durch eine physische Verknüpfung mit den k ersten Rechenknoten in dem entsprechenden ersten Knotencluster verbunden ist.

11. Verfahren nach Anspruch 9 oder 10, wobei das Aggregieren, durch den zweiten Knotencluster, des ersten Rechenergebnisses und des zweiten Rechenergebnisses, um ein drittes Rechenergebnis zu erlangen, Folgendes umfasst:
Verteilen, durch den zweiten Knotencluster, der zweiten Recheneingabe an die k zweiten Rechenknoten für verteiltes Rechnen, um k zweite verteilte Rechenergebnisse zu erlangen, wobei die k zweiten verteilten Rechenergebnisse das zweite Rechenergebnis sind;
Empfangen, durch den zweiten Knotencluster jeweils unter Verwendung der k zweiten Rechenknoten, von k Ausschnitten des ersten Rechenergebnisses, die durch die k ersten Rechenknoten in dem entsprechenden ersten Knotencluster gesendet werden;
Aggregieren, durch den zweiten Knotencluster jeweils unter Verwendung der k zweiten Rechenknoten, des zweiten verteilten Rechenergebnisses, das durch Rechnen durch jeden zweiten Rechenknoten erlangt wird, und der k Ausschnitte des ersten Rechenergebnisses des entsprechenden ersten Knotenclusters; und
Durchführen, durch den zweiten Knotencluster, verteilter Aggregation an Ergebnissen, die durch Aggregation unter Verwendung aller k zweiten Rechenknoten erlangt werden, um einen Ausschnitt des dritten Rechenergebnisses auf jedem zweiten Rechenknoten zu erlangen.

12. Verfahren nach Anspruch 9 oder 10, wobei das Aggregieren, durch den zweiten Knotencluster, des ersten Rechenergebnisses und des zweiten Rechenergebnisses, um ein drittes Rechenergebnis zu erlangen, Folgendes umfasst:
Verteilen, durch den zweiten Knotencluster, der zweiten Recheneingabe an die k zweiten Rechenknoten für verteiltes Rechnen, um k zweite verteilte Rechenergebnisse zu erlangen;
Empfangen, durch den zweiten Knotencluster unter Verwendung jedes der k zweiten Rechenknoten, des ersten Rechenergebnisses, das durch einen definierten ersten Rechenknoten in dem entsprechenden ersten Knotencluster gesendet wird, und Aggregieren des ersten Rechenergebnisses und der erlangten zweiten verteilten Rechenergebnisse; und
Aggregieren, durch den zweiten Knotencluster unter Verwendung eines definierten zweiten Rechenknotens in den k zweiten Rechenknoten, von Ergebnissen, die durch Aggregation unter Verwendung aller k zweiten Rechenknoten erlangt werden, um das dritte Rechenergebnis zu erlangen.

13. Verfahren nach einem der Ansprüche 9 bis 12, wobei das Verfahren ferner Folgendes umfasst:
Senden, durch den zweiten Knotencluster, eines ersten Parameters an die jeweiligen k ersten Knotencluster unter Verwendung der k zweiten Rechenknoten.

14. Verfahren nach einem der Ansprüche 9 bis 13, wobei die erste Recheneingabe und die zweite Recheneingabe ein Gewicht, Trainingsdaten, einen Versatz und einen Hyperparameter umfassen.

## Revendications

1. Système informatique basé sur une topologie d'arbre pour une formation distribuée à grande échelle, comprenant : une pluralité de groupes de noeuds, dans lequel la pluralité de groupes de noeuds constitue une structure de réseau multicouche selon une topologie d'arbre, tout arbre minimum dans la structure de réseau comprend un deuxième groupe de noeuds servant de noeud parent et au moins un premier groupe de noeuds servant de noeud enfant, et le deuxième groupe de noeuds est connecté à l'au moins un premier groupe de noeuds par l'intermédiaire d'une liaison physique, le deuxième groupe de noeuds comprend au moins un second noeud informatique, chaque premier groupe de noeuds comprend au moins un premier noeud informatique, et le second noeud informatique et le premier noeud informatique sont des accélérateurs de réseau neuronal, dans lequel
chacun de l'au moins un premier groupe de noeuds est configuré pour : obtenir un premier résultat de calcul sur la base d'une première entrée de calcul, et envoyer le premier résultat de calcul au deuxième groupe de noeuds par l'intermédiaire de la liaison physique ; et
le deuxième groupe de noeuds est configuré pour : recevoir, par l'intermédiaire de la liaison physique, au moins un premier résultat de calcul envoyé par l'au moins un premier groupe de noeuds, et agréger l'au moins un premier résultat de calcul et un deuxième résultat de calcul afin d'obtenir un troisième résultat de calcul, dans lequel le deuxième résultat de calcul est un résultat obtenu par le deuxième groupe de noeuds sur la base d'une seconde entrée de calcul, et l'au moins un premier résultat de calcul, le deuxième résultat de calcul et le troisième résultat de calcul sont des gradients,
dans lequel le deuxième groupe de noeuds est également configuré pour envoyer le troisième résultat de calcul à un troisième groupe de noeuds pour agrégation, dans lequel le troisième groupe de noeuds est un noeud parent du deuxième groupe de noeuds.

2. Système informatique selon la revendication 1, dans lequel le deuxième groupe de noeuds comprend k seconds noeuds informatiques, l'au moins un premier groupe de noeuds comprend k premiers groupes de noeuds, l'un quelconque des k premiers groupes de noeuds comprend k premiers noeuds informatiques, et k est un nombre entier supérieur ou égal à 1 ; et
dans l'arbre minimum de la structure de réseau, les k seconds noeuds informatiques dans le deuxième groupe de noeuds correspondent de manière biunivoque aux k premiers groupes de noeuds, et l'un quelconque des k seconds noeuds informatiques est connecté aux k premiers noeuds informatiques dans un premier groupe de noeuds correspondant par l'intermédiaire de la liaison physique.

3. Système informatique selon la revendication 2, dans lequel l'un quelconque des k premiers groupes de noeuds est spécifiquement configuré pour :
distribuer la première entrée de calcul aux k premiers noeuds informatiques pour le calcul distribué, afin d'obtenir k premiers résultats de calcul distribués ;
réaliser une agrégation distribuée sur les k premiers noeuds informatiques sur la base des k premiers résultats de calcul distribués respectivement, afin d'obtenir une tranche du premier résultat de calcul sur chaque premier noeud informatique ; et
envoyer de manière synchrone ou asynchrone, à l'aide des k premiers noeuds informatiques, k tranches du premier résultat de calcul à un second noeud informatique correspondant pour agrégation.

4. Système informatique selon la revendication 3, dans lequel le deuxième groupe de noeuds est spécifiquement configuré pour :
distribuer la seconde entrée de calcul aux k seconds noeuds informatiques pour le calcul distribué, afin d'obtenir k deuxièmes résultats de calcul distribués, dans lequel les k deuxièmes résultats de calcul distribués sont le deuxième résultat de calcul ;
recevoir, respectivement à l'aide des k seconds noeuds informatiques, les k tranches du premier résultat de calcul qui sont envoyées par les k premiers noeuds informatiques dans le premier groupe de noeuds correspondant ;
agréger, respectivement à l'aide des k seconds noeuds informatiques, le deuxième résultat de calcul distribué obtenu par le calcul par chaque second noeud informatique et les k tranches du premier résultat de calcul du premier groupe de noeuds correspondant ; et
réaliser une agrégation distribuée sur des résultats obtenus par agrégation à l'aide de l'ensemble des k seconds noeuds informatiques, afin d'obtenir une tranche du troisième résultat de calcul sur chaque second noeud informatique.

5. Système informatique selon la revendication 2, dans lequel l'un quelconque des k premiers groupes de noeuds est spécifiquement configuré pour :
distribuer la première entrée de calcul aux k premiers noeuds informatiques pour le calcul distribué, afin d'obtenir k premiers résultats de calcul distribués ;
réaliser une agrégation sur un premier noeud informatique spécifié dans les k premiers noeuds informatiques sur la base des k premiers résultats de calcul distribués, afin d'obtenir le premier résultat de calcul ; et
envoyer, à l'aide du premier noeud informatique spécifié, le premier résultat de calcul à un second noeud informatique correspondant pour agrégation.

6. Système informatique selon la revendication 5, dans lequel le deuxième groupe de noeuds est spécifiquement configuré pour :
distribuer la seconde entrée de calcul aux k seconds noeuds informatiques pour le calcul distribué, afin d'obtenir k deuxièmes résultats de calcul distribués ;
recevoir, à l'aide de chacun des k seconds noeuds informatiques, le premier résultat de calcul envoyé par le premier noeud informatique spécifié dans le premier groupe de noeuds correspondant, et agréger le premier résultat de calcul et les deuxièmes résultats de calcul distribués obtenus ; et
agréger, à l'aide d'un second noeud informatique spécifié dans les k seconds noeuds informatiques, des résultats obtenus par agrégation à l'aide de l'ensemble des k seconds noeuds informatiques, afin d'obtenir le troisième résultat de calcul.

7. Système informatique selon l'une quelconque des revendications 2 à 6, dans lequel la première entrée de calcul comprend un premier paramètre ; et le deuxième groupe de noeuds est également configuré pour :
envoyer le premier paramètre aux k premiers groupes de noeuds respectivement à l'aide des k seconds noeuds informatiques.

8. Système informatique selon l'une quelconque des revendications 1 à 7, dans lequel le système informatique est un système informatique à réseau neuronal ; et la première entrée de calcul et la seconde entrée de calcul comprennent un poids, des données de formation, un décalage et un hyperparamètre.

9. Procédé informatique utilisant le système informatique basé sur une topologie d'arbre selon l'une quelconque des revendications 1 à 8, comprenant : comprenant :
la réception (S101), par un deuxième groupe de noeuds, d'un premier résultat de calcul envoyé par au moins un premier groupe de noeuds, dans lequel le premier résultat de calcul est un résultat obtenu par chacun de l'au moins un premier groupe de noeuds sur la base d'une première entrée de calcul, le premier groupe de noeuds et le deuxième groupe de noeuds se trouvent dans tout arbre minimum d'une même topologie de réseau d'arbre, le deuxième groupe de noeuds est un noeud parent de l'au moins un premier groupe de noeuds, le deuxième groupe de noeuds comprend au moins un second noeud informatique, chaque premier groupe de noeuds comprend au moins un premier noeud informatique, et le second noeud informatique et le premier noeud informatique sont des accélérateurs de réseau neuronal ;
l'agrégation (S102), par le deuxième groupe de noeuds, du premier résultat de calcul et d'un deuxième résultat de calcul, afin d'obtenir un troisième résultat de calcul, dans lequel le deuxième résultat de calcul est un résultat obtenu par le deuxième groupe de noeuds sur la base d'une seconde entrée de calcul, et l'au moins un premier résultat de calcul, le deuxième résultat de calcul et le troisième résultat de calcul sont des gradients ; et
l'envoi (S103), par le deuxième groupe de noeuds, du troisième résultat de calcul à un troisième groupe de noeuds pour agrégation, dans lequel le troisième groupe de noeuds est dans la topologie de réseau d'arbre, et le troisième groupe de noeuds est un noeud parent du deuxième groupe de noeuds.

10. Procédé selon la revendication 9, dans lequel le deuxième groupe de noeuds comprend k seconds noeuds informatiques, l'au moins un premier groupe de noeuds comprend k premiers groupes de noeuds, et l'un quelconque des k premiers groupes de noeuds comprend k premiers noeuds informatiques ; et dans l'arbre minimum de la structure de réseau, les k seconds noeuds informatiques dans le deuxième groupe de noeuds correspondent de manière biunivoque aux k premiers groupes de noeuds, et l'un quelconque des k seconds noeuds informatiques est connecté aux k premiers noeuds informatiques dans le premier groupe de noeuds correspondant par l'intermédiaire d'une liaison physique.

11. Procédé selon la revendication 9 ou 10, dans lequel l'agrégation, par le deuxième groupe de noeuds, du premier résultat de calcul et du deuxième résultat de calcul, afin d'obtenir un troisième résultat de calcul comprend :
la distribution, par le deuxième groupe de noeuds, de la seconde entrée de calcul aux k seconds noeuds informatiques pour le calcul distribué, afin d'obtenir k deuxièmes résultats de calcul distribués, dans lequel les k deuxièmes résultats de calcul distribués sont le deuxième résultat de calcul ;
la réception, par le deuxième groupe de noeuds respectivement à l'aide des k seconds noeuds informatiques, de k tranches du premier résultat de calcul qui sont envoyées par les k premiers noeuds informatiques dans le premier groupe de noeuds correspondant ;
l'agrégation, par le deuxième groupe de noeuds respectivement à l'aide des k seconds noeuds informatiques, du deuxième résultat de calcul distribué obtenu par le calcul par chaque second noeud informatique et des k tranches du premier résultat de calcul du premier groupe de noeuds correspondant ; et
la réalisation, par le deuxième groupe de noeuds, d'une agrégation distribuée sur des résultats obtenus par agrégation à l'aide de l'ensemble des k seconds noeuds informatiques, afin d'obtenir une tranche du troisième résultat de calcul sur chaque second noeud informatique.

12. Procédé selon la revendication 9 ou 10, dans lequel l'agrégation, par le deuxième groupe de noeuds, du premier résultat de calcul et du deuxième résultat de calcul, afin d'obtenir un troisième résultat de calcul comprend :
la distribution, par le deuxième groupe de noeuds, de la seconde entrée de calcul aux k seconds noeuds informatiques pour le calcul distribué, afin d'obtenir k deuxièmes résultats de calcul distribués ;
la réception, par le deuxième groupe de noeuds à l'aide de chacun des k seconds noeuds informatiques, du premier résultat de calcul envoyé par un premier noeud informatique spécifié dans le premier groupe de noeuds correspondant, et l'agrégation du premier résultat de calcul et des deuxièmes résultats de calcul distribués obtenus ; et
l'agrégation, par le deuxième groupe de noeuds à l'aide d'un second noeud informatique spécifié dans les k seconds noeuds informatiques, de résultats obtenus par agrégation à l'aide de l'ensemble des k seconds noeuds informatiques, afin d'obtenir le troisième résultat de calcul.

13. Procédé selon l'une quelconque des revendications 9 à 12, dans lequel le procédé comprend également :
l'envoi, par le deuxième groupe de noeuds, d'un premier paramètre aux k premiers groupes de noeuds respectivement à l'aide des k seconds noeuds informatiques.

14. Procédé selon l'une quelconque des revendications 9 à 13, dans lequel la première entrée de calcul et la seconde entrée de calcul comprennent un poids, des données de formation, un décalage et un hyperparamètre.
